(19) Europäisches Patentamt / European Patent Office / Office européen des brevets

(11) **EP 2 959 631 B1**

(12) **EUROPEAN PATENT SPECIFICATION**

(45) Date of publication and mention
of the grant of the patent:
**26.06.2019 Bulletin 2019/26**

(21) Application number: **14709183.9**

(22) Date of filing: **17.02.2014**

(51) Int Cl.:
*H04L 9/32* ^(2006.01)          *G06F 21/64* ^(2013.01)
*G06F 21/62* ^(2013.01)

(86) International application number:
**PCT/EP2014/000429**

(87) International publication number:
**WO 2014/127904 (28.08.2014 Gazette 2014/35)**

(54) **VERIFICATION SYSTEM AND METHOD WITH EXTRA SECURITY FOR LOWER-ENTROPY INPUT RECORDS**

ÜBERPRÜFUNGSSYSTEM UND -VERFAHREN MIT ZUSÄTZLICHER SICHERHEIT FÜR EINGABEAUFZEICHNUNGEN MIT GERINGERER ENTROPIE

SYSTÈME ET PROCÉDÉ DE VÉRIFICATION AVEC SÉCURITÉ SUPPLÉMENTAIRE POUR ENREGISTREMENTS DE SAISIE À ENTROPIE RÉDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2013   US 201361768386 P**
**24.05.2013   US 201313902778**

(43) Date of publication of application:
**30.12.2015   Bulletin 2015/53**

(73) Proprietor: **Guardtime SA**
**1006 Lausanne (CH)**

(72) Inventors:
• **BULDAS, Ahto**
  **12916 Tallinn (EE)**
• **TRUU, Ahto**
  **50415 Tartu (EE)**

(74) Representative: **Grünecker Patent- und Rechtsanwälte**
**PartG mbB**
**Leopoldstraße 4**
**80802 München (DE)**

(56) References cited:
**EP-A1- 1 783 652          WO-A1-01/11843**
**WO-A1-2010/011342     US-B2- 7 698 557**

EP 2 959 631 B1

**Description**

**FIELD OF THE INVENTION**

This invention relates to a system and method for verifying that any of a set of digital records has not been altered, without leaking any information about the contents of other records.

**BACKGROUND**

The digital world is defined by events, many of which are or can be logged. For example, in the context of computer systems, *syslog* may be used as "a standard for computer data logging. It separates the software that generates messages from the system that stores them and the software that reports and analyzes them. *Syslog* can be used for computer system management and security auditing as well as generalized informational, analysis, and debugging messages. It is supported by a wide variety of devices (like printers and routers) and receivers across multiple platforms. Because of this, *syslog* can be used to integrate log data from many different types of systems into a central repository" (http://en.wikipedia.org/wiki/Syslog).

*Rsyslog,* developed by Rainer Gerhards, extends *syslog* as "an open source software utility used on UNIX and Unix-like computer systems for forwarding log messages in an IP network. It implements the basic *syslog* protocol, extends it with content-based filtering, rich filtering capabilities, flexible configuration options and adds important features such as using TCP for transport" (http://en.wikipedia.org/wiki/Rsyslog).

Such logs may be maintained not only for "real" computer systems but for virtualized computers ("virtual machines" - VMs) as well; indeed, the system and state changes of VMs themselves may be logged as events. Events are not restricted to computers, of course. As another example, telephone companies routinely log all uses of their subscribers' phones, including any exchange of voice, text, network communications, often including time-tracking, and not only for purposes of billing. In short, any activity that can be recorded and stored in digital form can be considered to be a loggable event.

Many methods are well known for digitally signing various sorts of records. Loggable events - singularly or grouped - can be treated as such records and signed as any others so as to provide a certain level of assurance that a log of these events, or some individually signed subset, presented later, exactly matches what was signed. One potential problem, however, is that the data contained in event logs or other input data sets may display unacceptably low entropy, that is, the possible input data may be too limited or is too "organized"; for example, it may have relatively few possible variations or a relatively higher probability of occurrence of one entry given another entry. Thus, whereas the universe of all possible, general documents or other digital records is too vast for exhaustive analysis (trying all possibilities) to succeed, this may not be true - or not provable to a level of confidence desired by many users - in the case of events. System event logs may often have this property of a small enough range of possibilities that an exhaustive "brute force" attack may succeed in defeating the otherwise inherent security of any data-signing scheme. Of course, even in general, high-entropy environments, an additional, provable assurance of security is always welcome.

Increasingly, logs from various information systems are used as evidence. With that trend, also the requirements on maintenance and presentation of the log data are growing. Integrity and authenticity, that is, the confidence that the information in the log has not been tampered with or even replaced with another one altogether, are obvious requirements, especially if the log data is to be used for dispute resolution or produced as evidence in legal proceedings, tax audits, etc., to ensure that a virtual machine has not been altered, for example upon migration, to provide proof of financial transactions, to verify telephone usage, etc. As information systems log all their activities in a sequential manner, often the details of the transactions involved in the dispute are interspersed with other information in a log. To protect the confidentiality of the unrelated events, it is then desirable to be able to extract only some records from the signed log and still prove their integrity. In the light of the above, there is therefore a need to addresses all or at least some of the following design goals for a log-signing scheme:

- The integrity of the whole log should be verifiable such that no records can be added, removed or altered undetectably.
- The integrity of any record should be provable without leaking any information about the contents of any other records in the log.
- The signing process should be efficient in both time and space. (Ideally, there should be a small constant per-record processing overhead and small constant per-log storage overhead.)
- The extraction process should be efficient in both time and space. (Ideally, a small constant-sized proof of integrity should be able to be extracted for any record in time sub-linear in the size of the log.)
- The verification process should be efficient in time. (Ideally, running in time linear in the size of the data to be verified, whether verifying the whole log or a single record.)

WO01/11843 A1 discloses a system to create and validate authorization certificates. A hash-tree data structure is created containing a pre-defined list of possible information, such as authorizations, restrictions, privileges, or validity period notices.

It is therefore the object of the present invention to provide an improved method for authenticating digital records, and a corresponding system.

This object is solved by the subject matter of the independent claims.

Preferred embodiments are defined by the dependent claims.

**BRIEF DESCRIPTION OF THE DRAWINGS**

Figure 1 illustrates the inclusion of blinding masks within a verification tree structure.

Figure 2 illustrates a canonical binary tree.

Figure 3 illustrates a counter mode embodiment of the invention.

Figure 4 illustrates various layers of a generalized digital record verification and signing infrastructure.

Figure 5 illustrates the verification infrastructure along with various data and computational structures maintained and computed within the different layers.

Figure 6 shows a subset of Figure 5 to illustrate a digital signature and recomputation of authentication values using the signature.

Figure 7 illustrates publication to create a permanent trust-free authentication feature.

Figure 8 illustrates extension of a digital signature to enable system-independent authentication by recomputation.

**DETAILED DESCRIPTION**

This invention relates to a system and method for verifying that a set of digital input records has not been altered after being entered into and signed by the system. By providing a mechanism for additional security, the invention is particularly useful where the universe of possible inputs is small enough that exhaustive attacks have a higher than acceptable chance of success, that is, where the entropy of the input records is unacceptably low. This will often be the case where the input records are event logs, such as system or other event logs for computer systems (both physical and virtual), telephone and other telecommunications devices, computer-controlled machine and processes, etc. The invention may be used, however, in any situation where increased security is desired, including even for high-entropy data that one wishes to be able to verify.

The primary example used below to describe various inventive aspects of the invention will be for event logs such as *syslog, rsyslog,* Windows event log, etc. As just explained, these are particularly relevant situations, but, nonetheless, examples only.

**Data Model**

Embodiments of the invention provide a digital data-signing scheme that will achieve almost all of the goals mentioned above - there will in some chosen implementations be some trade-offs on the efficiency goals, but typically this will not compromise the security goals. Purely by way of example, aspects of the invention are described below in the context of securely and digitally signing event logs, although, as mentioned elsewhere, the invention can also be used to increase security even in the case of other types of input records to be signed.

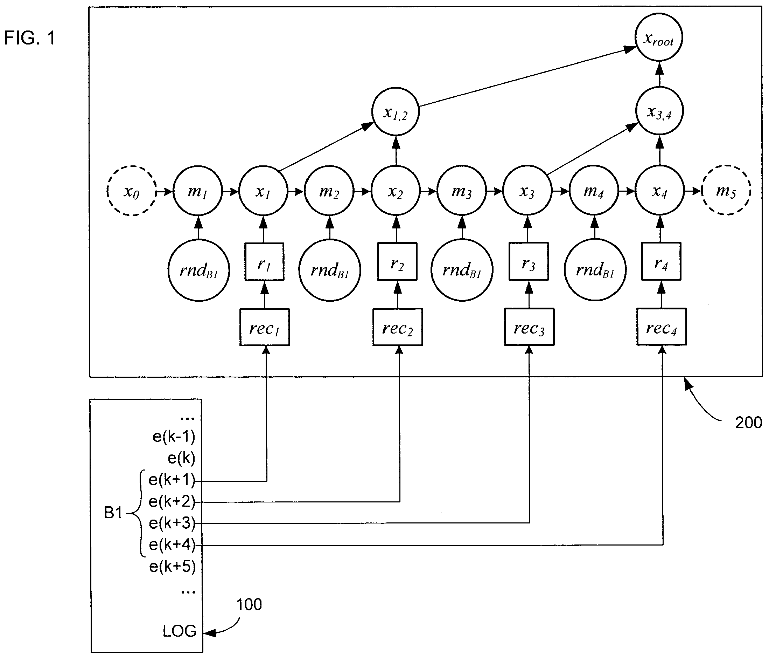

A computational process producing a log may, in principle, run indefinitely and thus the log as an abstract entity need not (but of course may) have a well-defined beginning and end. In the following, by way of example, the log is modeled as an ordered sequence of blocks, where each block in turn is an ordered sequence of a finite number of records. In Figure 1, for example, a log 100 is illustrated as containing a sequence of events ... e(k-1), e(k), e(k+1), ..., e(k+5).... By way of a very simplified example, e(k+1)-e(k+4) are illustrated as being grouped into a block B1. In most real-life circumstances, each block may contain many more than four entries, on the order of thousands or even millions, but B1 is shown in the figure as comprising only four records for ease of illustration and without loss of generality. Systems designers will know how to choose the proper block size for given implementations of the invention.

Many practical logging systems work this way, for example, in the case of *syslog* output being sent to a log file that is periodically rotated. The most straightforward strategy - simply signing each log block as a unit - would satisfy all the requirements related to processing of the whole block, but would make it impossible to prove the integrity of individual records without exposing everything else in the block. Another possible strategy - signing each record individually - would, of course, have very high overhead in terms of both processing and storage, as signing is quite an expensive operation and the size of a signature may easily exceed the size of a typical log record; more importantly, it would also fail to fully ensure the integrity of the log as a whole since deletion of a record along with its signature would typically not be detected in this scheme.

A possible improvement over both of the above naive strategies would be to compute a hash value of each record in a log block and then sign the sequence of hash values instead of the records themselves. This would ensure the integrity of the whole log block, significantly reduce the overhead compared to signing each record separately and also remove the need to ship the whole log block when a single record is needed as evidence; however, the size of the proof of a record would still be linear in the size of the block, which can easily run into multiple millions of records for a busy system.

This invention does not depend on any particular method for defining the size of a block to be processed. One common and natural choice is, as used by way of example here, to define a block as having a certain number of entries. One advantage of this choice is that one can if desired set the block size to be some number that is easy for processing or indexing, such as a power of two. Another choice could be to define a block as being all entries that occur in certain time intervals. Yet another choice might be to define certain events as "triggers", such that a new block is started upon the occurrence of one or more starting events (such as migration of a virtual machine, switching to execution of chosen processes, I/O requests, etc.), and is terminated and processed upon the occurrence of any ending event. Skilled programmers will know how to make still other choices, such as those involving multiple selection rules, for example, those combining both numerical and temporal limits and/or triggers.

In implementations of the invention designed for use with more general input sets of digital records, any known method may be used to define them as an unambiguous set of digital data for processing and signature. As mentioned, this invention is particular suitable for verifying individual members of sets of relatively low-entropy input records, but it may also be used more generally to provide additional security even for sets of relatively high-entropy input records such as general documents converted into or originally created in digital form, insurance, financial, legal or medical records or results or other test data, SMS telephone messages (telephone "text message"), a sub-set of a hard disk, one or more files representing the whole or partial state of a virtual machine, or any of countless other types of digital records one might want to securely verify.

## Merkle Trees with Blinding Masks

To further reduce the size of the evidence for a single record, the records may be aggregated using a Merkle tree data and computational structure, that is, a binary tree whose leaves are the hash values of the records and each non-leaf node is computed as the hash value of the concatenation of the values in its child nodes. Such a Merkle tree structure, or a similar hash tree structure, may be used (with adaptation according to this invention) in conjunction with a data-signing infrastructure. The hash value in the root node of the hash tree may then be digitally signed and for each leaf node a compact (logarithmic in the number of leaves) proof extracted showing that the hash value in the leaf participated in the computation that led to the signed root hash value. There are two complications, however. The first is that the security of such an aggregation scheme can in general be proven only if some restrictions are placed on the shapes of the hash chains allowed as participation proofs. One sufficient method for accomplishing this is appending the height of the sub-tree to the concatenated hash values from the child nodes before hashing; this then limits the length of the hash chains accepted during verification and allows for the security of the scheme to be formally proven.

The second complication is that the hash chain extracted from the Merkle tree for one node contains hash values of other nodes. A strong hash function cannot generally be directly reversed to learn the input value from which the hash value in the chain was created, but a typical log record may contain insufficient entropy for this to hold true - an attacker who knows the pattern of the input could exhaustively test all possible variants to find the one that yields the hash value actually in the chain and thus learn the contents of the record. To prevent this kind of informed brute-force attack, according to this invention, a blinding mask with sufficient entropy is added, preferably to each record before aggregating the hash values.

Figure 1 illustrates a computation component - a chained masking hash tree 200 - and its method of operation for log-signing using a Merkle tree with interlinks and blinding masks: $rec_i$ are the records to be signed; $r_i$ are the hash values of the records; *rnd* is a random or pseudo-random number; $m_i$ are the blinding masks; $x_i$ are leaves; $x_{a,b}$ are internal nodes of the Merkle tree; and $x_{root}$ is the value to be signed. In the illustrated embodiment, each input record $rec_i$ is a respective one of the events e(k+1) ... e(k+4). In an alternative possible application $r_i$ would be the root hash values from aggregators and $x_{root}$ the calendar value computed by the core; "aggregators", "calendar value" and "core" are explained below in the context of one possible and advantageous signing infrastructure.

Figure 1 illustrates the resulting data structure, where the hashing and signing process may run as follows:

- A sufficiently strong hash function is picked.
- For each log block, a respective and preferably unique random number *rnd* is generated. Merely for the sake of succinctness, the numbers *rnd* are referred to below as being "random", even where, strictly, they are "pseudo-random". As long as they are stored for later recomputational purposes described below, even purely random numbers could be used, but in most cases this will be unnecessarily complicated. In Figure 1, for example, the random number $rnd_{B1}$ is shown as having been generated for block B1. Generation of random (or, more correctly, pseudo-random) numbers is a well-known procedure, and any known technique may be used to generate *rnd* for each respective event block. For the sake of computation efficiency and security, the value of *rnd* is preferably about as long as the output of the hash function and kept with the same confidence as the log data itself; those familiar with cryptographic hash functions will know how to choose the size of *rnd* to suit the needs of their particular implementations.
- For each record $rec_i$ in the block:

  - The hash value of the record is computed as $r_i = \text{hash}(rec_i)$, where $rec_i$ are the contents of the record.
  - The blinding mask is computed as $m_i = \text{hash}(x_{i-1} \parallel rnd)$, where $x_{i-1}$ is the hash value from the leaf node of the previous record and *rnd* is the random number generated for the current block. An advantage of using the same random number for hashing with every $x_{i-1}$ in a given block is that it greatly reduces the storage and computational burden with essentially no loss of security - recall that there may be thousands or millions of events in a given block, and to generate and also store and associate a separate random number with each event would be unnecessarily time- and space-consuming. Note that the previous record may have been the last one in the previous log block - such inter-block linking allows for verification that no blocks have been removed from the log. For the very first record of the log (the first record of the first block), a zero hash value may be used in place of the $x_{i-1}$, which does not exist. Note also that hashing of *rnd* with this placeholder value is still needed; otherwise, the hash chain for the first record might leak the value of *rnd,* which in turn could be used to brute-force other records.
  - The level of the leaf node corresponding to the record in the tree is defined as $\ell_i = 1$.
  - The hash value for the leaf is computed as $x_i = \text{hash}(m_i \parallel r_i \parallel \ell_i)$.

- For each non-leaf node $x_{a,b}$ in the tree:

  - The level of the node is defined as $\ell_{a,b} = \max(\ell_a, \ell_b) + 1$, where $\ell_a$ and $\ell_b$ are the levels of its child nodes.
  - The value for the node is computed as $x_{a,b} = \text{hash}(x_a \parallel x_b \parallel \ell_{a,b})$, where $x_a$ and $x_b$ are the hash values from its child nodes. Finally, the hash value in the root node $x_{root}$ is signed as described above.

In this description of various examples of certain aspects of the invention, standard hash-function notation is used and different hash functions are evaluated. Thus, for example, "$\parallel$" is used to indicate concatenation. The invention does not require the hashing orders illustrated. For example, the system could just as well compute as $m_i = \text{hash}(rnd \parallel x_{i-1})$ instead of as $m_i = \text{hash}(x_{i-1} \parallel rnd)$, or $x_{a,b} = \text{hash}(\ell_{a,b} \parallel x_a \parallel x_b)$ instead of $x_{a,b} = \text{hash}(x_a \parallel x_b \parallel \ell_{a,b})$, as long as any given implementation of the invention uses a chosen hashing order consistently, since hash functions typically do not have commutativity of input values.

Having built and signed such a tree, the hash chain from any leaf to the root can be extracted and presented as a proof that the leaf participated in the computation that yielded the signed root hash value.

For example, to prove that $rec_2$ was part of the signed log block, $rec_2$ itself, the sequence (right; $m_2$); (right; $x_1$); (left; $x_{3,4}$) and the signature on the root hash value would be presented. Assume an input record is presented that purports to be the "real" $rec_2$; in other words, at first it is a "candidate". A verifier would then be able to re-compute:

$$r_2 = \text{hash}(rec_2)$$

$$x_2 = \text{hash}(m_2 \parallel r_2 \parallel 1)$$

$$x_{1,2} = \text{hash}(x_1 \parallel x_2 \parallel 2)$$

$$x_{root} = \mathrm{hash}(x_{1,2} \parallel x_{3,4} \parallel 3)$$

and then verify that the newly computed $x_{root}$ matches the signature. If so, then the candidate input record is verified to the level of security of $x_{root}$. If $x_{root}$ is then also digitally signed and verified, then the candidate input record itself will be verified to this level of security.

Note that the method described here - with blinding masks added into hash computations in a tree structure - differs from the technique known as "salting", which associates a random number (the "salt") one-to-one with a password/pass phrase; the salt+password combination is then hashed. The hash and the salt are then stored. As explained in http://en.wikipedia.org/wiki/Salt_(cryptography), "Salts ... make dictionary attacks and brute-force attacks for cracking large numbers of passwords much slower (but not in the case of cracking just one password). Without salts, an attacker who is cracking many passwords at the same time only needs to hash each password guess once, and compare it to all the hashes." In short, because salting typically involves a one-to-one association of some output based on a known function of a single password/passphrase plus a known (at least in the sense of being stored, with the possibility of being hacked) salt, there is still the possibility of reverse computation, albeit generally slower than otherwise. Since the salt and the hash output will be known, a brute force attack will still often be unacceptably feasible if the input data has lower entropy than the universe of passwords typically has.

In contrast, the hashing structure of this invention makes it in practice impossible to compute in reverse from the $x_i$ or $x_{a,b}$ value to any of the input records (except the records the attacker already possesses, obviously), because the attacker does not have access to the *rnd* value, even in implementations where a single *rnd* is applied for all entries in a given block.

**Canonical Binary Trees**

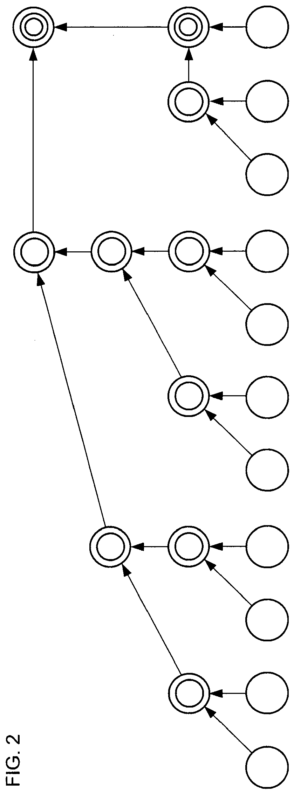

In the discussion above, the shape of the Merkle tree is not specified. If the number of leaves is an even power of two, building a complete binary tree seems natural, but in other cases the appropriate shape is not necessarily obvious. The only requirement, however, is that the tree should be built in a deterministic manner so that a verifier is able to construct the exact same tree as the signer did. A practical consideration, however, is that to achieve the logarithmic size of the integrity proofs of the individual records, the tree should preferably not be overly unbalanced. Thus, one example of a canonical binary tree with n leaf nodes (shown for n = 11 in Figure 2) can be built as shown in Figure 2. In Figure 2, eleven leaves (single-ring nodes), grouped into three complete trees (two-ring nodes) are merged to a single tree with minimal height (three-ring nodes). The tree-building process may be as follows:

- The leaf nodes are laid out from left to right (single-ring nodes in the figure).
- The leaf nodes are collected into complete binary trees from left to right, making each tree as big as possible using the leaves still available (adding the two-ring nodes on the figure).
- The complete trees are merged into a single tree from right to left which means joining the two smallest trees on each step (adding the three-ring nodes on the figure).

A useful property of canonical trees is that they can be built on-line, as the new leaf nodes arrive, without knowing in advance the eventual size of the tree, and keeping in memory only a logarithmic number of nodes (the root nodes of the complete trees constructed so far). Therefore, using the scheme outlined here, all the security goals are achieved, and almost the performance goals as well:

- At the minimum, just one hash value per block *(rnd)* has to be stored in addition to the signature itself.
- Three hashing operations per record and one signing operation per block are needed for signing the log.
- Three hashing operations per record and one signature verification operation per block are needed for verification of the log.
- Three hashing operations per record in the log are needed for extracting the proof of integrity of an individual record. This falls short of the desirable but non-essential goal of sub-linear performance of the extraction, but runtime reductions can be achieved at the expense of increased storage overhead, as will be explained below.
- Logarithmic (in size of the log block) number of hash values and one signature have to be shipped as the integrity proof for an individual record. While this is formally not constant-sized, it is still small enough in practice.
- Logarithmic number of hashing operations and one signature verification operation are sufficient for verification of the integrity proof for an individual record.

**Reference Example Procedures**

In this section, reference example procedures are presented, by way of example only, for aggregating a log block, extracting an integrity proof for an individual record and verifying a record based on such proof. Also discussed are some potential trade-offs where additional security benefits or runtime reductions could be gained at the cost of increased storage overhead. It is stressed that these example procedures are included merely to demonstrate to skilled programmers one way to implement the respective functions in one implementation of the invention. Such programmers will of course have their own design preferences as to details, arrangement of data structures, choice of programming languages, etc., without departing from the main idea of this invention.

**Aggregation of Log Records**

Example Procedure 1 aggregates a block of records for signing or verification. The input description numbers the records 1, ..., N, but the value of N is not used and the example procedure can easily be implemented for processing the records on-line. The amortized processing time per record is constant and the worst-case actual processing time per record is logarithmic in the number of records in the block, as is the size of the auxiliary working memory needed.
To sign a log block:

- A fresh random value is generated for *rnd.*
- The log records of the current block, the *rnd* and the last leaf hash value from the previous block are fed into Example Procedure 1.
- The resulting root hash value is signed and the last leaf hash value from this block passed on to aggregation of the next block.
- At the very least the *rnd* and the signature on the root hash value must be saved for later verification.

To verify a signed log block:

- The log records, the *rnd* saved during signing, and the last leaf hash value from the previous block are fed into Example Procedure 1.
- The freshly re-computed root hash value is checked against the saved signature.

Although not strictly required, the last leaf hash value of the previous log block should preferably also be saved along with *rnd* and the signature in practice; otherwise, the verification process for the current block will need to re-hash the previous block to obtain the required input for the current verification. Assuming a consistent storage policy, for that, in turn, the next previous block would need to be re-hashed, etc. While this would obviously be inefficient, an even more dangerous consequence is that any damage to any log block would make it impossible to verify any following log blocks, as one of the required inputs for verification would no longer be available.
Considering the negative scenarios in more detail, the only conclusion that could be made from a failed verification is that something has been changed in either the log block or the authentication data. If it is desirable to be able to detect the changes more precisely, either the record hash values $r_i$ or the leaf hash values $x_i$ computed by Example Procedure 1 could be saved along with the other authentication data. Then the sequence of hash values can be authenticated against the signature and each record checked against its hash value, at the expense of small per-record storage overhead. It should also be noted that if the record hashes are saved, they should be kept with the same confidentiality as the log data itself, to prevent them being used for the informed brute-force attack that the blinding masks are to prevent.

Example Procedure 1 -- Aggregate a block of records for signing or verification

**inputs**

$rec_{1...N}$ : input records

$rnd$ : initial value for the blinding masks

$x_0$: last leaf hash of previous block (zero-filled if this is first block)

**do**

{Initialize block: create empty roots list}

$R :=$ empty list

{Process records: add them to the Merkle forest in order}

**for** $i := 1$ **to** $N$ **do**

$m_i :=$ hash($x_{i-1} \parallel rnd$)

$r_i :=$ hash(canonicalize($rec_i$))

$x_i :=$ hash($m_i \parallel r_i \parallel 1$)

{Add $x_i$ to the forest as new leaf, update roots list}

$t := x_i$

**for** $j := 1$ **to** length($R$) **do**

 **if** $R_j =$ **none then**

  $R_j := t;\ t :=$ **none**

 **else if** $t \neq$ **none then**

  $t :=$ hash($R_j \parallel t \parallel j+1$); $R_j :=$ **none**

**if** $t \neq$ **none then**

 $R := R \parallel t;\ t :=$ **none**

{Finalize block: merge forest into a single tree}

$root :=$ **none**

**for** $j := 1$ **to** length($R$) **do**

 **if** $root =$ **none then**

  $root := R_j\ ;\ R_j :=$ **none**

 **else if** $R_j \neq$ **none then**

  $root :=$ hash($R_j \parallel root \parallel j+1$); $R_j :=$ **none**

**outputs**

$root$: root hash of this block (to be signed or verified)

$x_N$: last leaf hash of this block (for linking next block)

### Extraction of Hash Chains

Example Procedure 2 extracts the hash chain needed to prove or verify the integrity of an individual record. The core procedure is similar to that in Example Procedure 1, with additional tracking of the hash values that depend on the target record and collecting a hash chain based on that tracking.

Example Procedure 2 -- Extract a hash chain for verifying one record

**inputs**

$rec_{1...N}$: input records

$pos$: position of the target record within block ($1... N$)

$rnd$: initial value for the blinding masks

$x0$: last leaf hash of previous block (zero-filled if this is first block)

**do**

{Initialize block}

$R$ := empty list

$C$ := empty list

$\ell$ := **none** {Target record not in any level yet}

{Process records, keeping track of the target one}

**for** $i$ := 1 **to** N **do**

   $m_i$ := hash($x_{i-1}$ ‖ $rnd$)

   $r_i$ := hash(canonicalize($rec_i$))

   $x_i$ := hash($m_i$ ‖ $r_i$ ‖ 1)

   **if** $i = pos$ **then**

      $C$ := $C$ ‖ (**right**; $m_i$; 0)

      $\ell$ := 1; d := **right** {Target to be added to right on leaf level}

   $t$ := $x_i$

   **for** $j$ := 1 **to** length($R$) **do**

      **if** $R_j$ = **none then**

         **if** $j = \ell$ **then**

            $d$ := **left** {Moving target to left}

         $R_j$ := $t$; $t$ := **none**

      **else if** $t \neq$ **none then**

         **if** $j = \ell$ **then**

            $C$ := $C$ ‖ ($d$; **if** $d$ = **right then** Rj **else** t **end**; 0)

            $\ell$ := $j$+1; $d$ := **right** {Merging target to right for next

level}

$$t := \mathrm{hash}(R_j \parallel t \parallel j+1); R_j := \mathbf{none}$$

**if** $t \neq$ **none then**

   **if** $\mathrm{length}(R) < \ell$ **then**

      $d := \mathbf{left}$ {Moving target to left}

      $R := R \parallel t; t := \mathbf{none}$

{Finalize block: merge forest into a single tree}

$root := \mathbf{none}$

**for** $j := 1$ **to** $\mathrm{length}(R)$ **do**

   **if** $root =$ **none then**

      **if** $j = \ell$ **then**

         $d := \mathbf{right}$ {Moving target to right}

         $root := R_j; R_j := \mathbf{none}$

   **else if** $R_j \neq$ **none then**

      **if** $j \geq \ell$ **then**

         $C := C \parallel (d; \mathbf{if}\ d = \mathbf{right}\ \mathbf{then}\ R_j\ \mathbf{else}\ root\ \mathbf{end}; j\!-\!\ell)$

         $\ell := j+1; d := \mathbf{right}$ {Merging target to right for next level}

      $root := \mathrm{hash}(R_j \parallel root \parallel j+1); R_j := \mathbf{none}$

**outputs**

   $C$: hash chain from the target record to the root of block

Applying the choices in the example procedures above, the output value is a sequence of (direction, sibling hash, level correction) triples. The direction means the order of concatenation of the incoming hash value and the sibling hash value. The level correction value is included to account for cases when two sub-trees of unequal height are merged and the node level value increases by more than 1 on the step from the root of the lower sub-tree to the root of the merged tree. (The step from the lower three-ringed node to the higher one on Figure 2 is an example.) Because Example Procedure 2 is closely based on Example Procedure 1, its performance will also be similar and thus it falls somewhat short of the proposed ideal of sub-linear runtime for hash chain extraction. This is unlikely to be a real issue for *syslog* integrations, however, since locating the records to be presented is typically already a linear-time task and thus reducing the proof extraction time would not bring a significant improvement in the total time. However, if needed, it would be possible to trade space for time and achieve logarithmic runtime for the hash chain extraction at the cost of storing two hash values per record. Indeed, if values of all the Merkle tree nodes (shown as the "x" nodes in Figure 1) are kept, the whole hash chain may be extracted with no new hash computations needed. By the way of example, the hash values could be indexed and each of them seeked to in constant time if the same-size values would be stored in the order in which they are computed as $x_i$ and $R_j$ in Example Procedure 1. Other techniques could also be applied to similar effect.

Also note that the need to access the full log file in this example procedure is not a compromise of confidentiality goals, since the extraction process may be executed by the owner of the log file and only the relevant log records and the hash chains computed for them by Example Procedure 2 are supplied to outside parties.

## Computation of Hash Chains

Example Procedure 3 computes the root hash value of the Merkle tree from which the input hash chain was extracted in one prototype of the invention. The hash chain produced by Example Procedure 2 and the corresponding log record will typically be fed into Example Procedure 3 and the output hash value verified against the signature to prove the integrity of the record.

Example Procedure 3 - Compute the root hash value from a hash chain

**inputs**

    *rec*: input record

    *C*: hash chain from the record to the root of block

**do**

    *root* := hash(canonicalize(*rec*))

    $\ell := 0$

    **for** $i := 1$ **to** length(*C*) **do**

        $(d, S, L) := C_i$ {direction, Sibling hash, Level correction}

        $\ell := \ell + L + 1$

        **if** $d =$ **left then**

            *root* := hash(*root* ‖ *S* ‖ $\ell$)

        **else**

            *root* := hash(*S* ‖ *root* ‖ $\ell$)

**outputs**

    *root*: root hash of the block (to be verified using the signature)

In some implementations of the invention, users will be satisfied simply to verify an input event up to the level of the $x_{root}$ value associated with the respective block. Recall that, if (as is preferred but not strictly required) the previous value $x_0$ is included in the computation of even the hash value for the first value $x_1$ in a current block, then $x_{root}$ will also encode information from all previous blocks. Digitally signing $x_{root}$ with any standard signature may then also suffice, if desired at all. Nonetheless, a digital signing method is described below that ensures the integrity of $x_{root}$ even within a potentially much larger framework so as to provide even greater security. In other words, although individual events can be verified within the structure 100, 200 illustrated in Figures 1 and 2, greater security can be provided by a prudent choice of a signing system for $x_{root}$ as well.

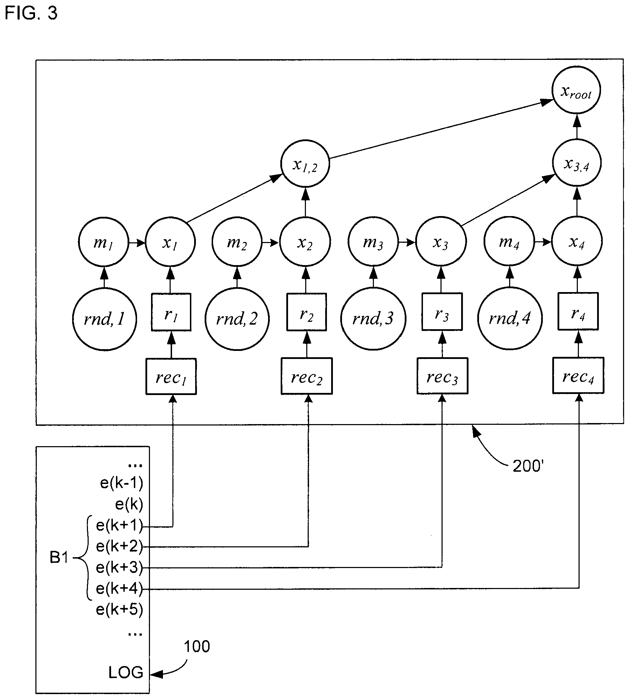

The embodiment of the invention illustrated in Figures 1 and 2 and discussed about includes chaining of values, from the final value $x_0$ of a previous entry block to be hashed with *rnd* to create a hash value $m_1$ that in turn is hashed with $r_1$ to provide $x_1$, and so on. In other words, there is a "chain" of calculations from each "*m*" value to its follow "*x*" value, to its subsequent "*m*", etc. This is not the only possible embodiment. Figure 3, for example, illustrates a "counter mode" embodiment of the masking hash tree computation module 200', in which, to compute $m_j$, there is no hashing of *rnd* with the previous *x* value $x_{j-1}$. Instead, each $m_j$ is preferably computed as a hash of the current block's *rnd* and the block record number *j*. Thus, $m_j = $ hash(*rnd*‖*j*). Modifications to the routines used to compute $x_{root}$ and later to verify a given *rec* value will be obvious to skilled programmers given the description of the chain mode embodiment of Figures 1 and 2.

**Example Implementation Details**

This section outlines some practical concerns regarding the implementation of the example of one embodiment of the invention for signing *syslog* or similar event messages. Skilled programmers will know how to choose suitable procedures for other implementations. As one example of many possible deployment scenarios, the example here concentrates on signing the output directed to a text file on a log collector device, which is discussed in Rainer Gerhards, The Syslog Protocol, RFC 5424, IETF, 2009.

## Log Rotation

Assume the log is modeled as an ordered sequence of blocks, where each block in turn is an ordered sequence of a finite number of records, and note that the case of *syslog* output being sent to a periodically rotated log file could be viewed as an instantiation of this model. The model is here refined to distinguish the physical blocks (the rotated files) from the logical blocks (implied by signing), because it is often desirable to sign the records with a finer granularity than the frequency of rotating the log files. For practical reasons, the system may allow a log file to contain several signed blocks, but prohibit a signed block from spanning across file boundaries. This means that when logs are rotated, the current signature block will always be closed and a new one started from the beginning of the new log file. The hash links from the last record of previous block to the first record of the next block do span the file boundaries, though, and thus still enable verification of the integrity of the whole log, however the files may have been rotated.

## Record-Level Log Signing in Multi-Tenant Environments

The invention can also be implemented for record-level log signing in multi-tenant environments, that is, environments in which two or more differently defined entities generate events that are logged in the same log. In such an environment, it is helpful to make a few general assumptions regarding the handling of logs. A first assumption is that logs will have records from different tenants interleaved and that these logs will need to be separated before delivery to the respective tenants. A second assumption is that in an interleaved log, the origin of each record will be clearly decidable. If this second assumption is violated, the log-separation problem will lack a well-defined solution, such that the question of signature separation is not applicable.

One property of the multi-tenant case is that the separation of the shared log into a set of interleaved threads is pre-determined: one can assume that the first step in any log processing is separation of records by tenant and after that each tenant will perform any further analysis on its own subset. Therefore, it could be beneficial to provide for a signing mechanism that protects the integrity of each thread as well as the integrity of the whole log. One possible solution, considering the small overhead of signing, would be to view each tenant's thread as a virtual log within the shared log, and then to link and sign the records in each of the threads in addition to the global thread containing all records in the log. Assuming roughly equal division of the N records of the shared log among K tenants, in addition to the log(N)-sized root list to be kept in memory and one signature to be archived for the long term for the whole log, the server would need to keep K additional log(N/K)-sized root lists and archive K additional signatures.

At the cost of leaking the number of tenants, the number of signatures could be reduced back to one by adding one extra aggregation layer (corresponding, in Figure 1, to one extra "level" in the tree) to combine the K+1 root hash values into one and signing only this aggregate of aggregates. The records themselves (and the per-record hash values, if desired) may then still be kept in only one copy by the host. (A copy of the relevant records may then be made and provided to each tenant.) Each tenant will then be able to verify that no records have been altered in, added to, or removed from its thread after the log was signed.

As mentioned, the uppermost value $x_{root}$ of the tree structure is then preferably digitally signed. Many schemes exist that would be suitable for signing (using time-stamping or otherwise) such data. Three of very many common and known methods are PKCS#7 or OpenPGP signature or a PKI-signed RFC3161 time-stamp.

Guardtime AS of Tallinn, Estonia, has developed a signing infrastructure that includes a distributed hash tree structure that provides exceptionally high reliability for authentication of digital records (defined essentially as any set of digital information) with no need for keys. See, for example, http://www.guardtime.com/signatures/technology-overview/ for a summary of the Guardtime technology. Aspects of the Guardtime system are disclosed as well in U.S. Patent Nos. 7,698,557; 8,347,372; and 8,312,528 (all "System and method for generating a digital certificate"). As mentioned, this invention does not require any particular signing scheme, but the Guardtime system is described here because of its particular advantages (among others, a high level of security, computational efficiency, substantially unlimited scalability, and not requiring keys) in general, and in the specific context of this invention in particular.

## General Hash-Tree-Based Verification with a Distributed Calendar Infrastructure

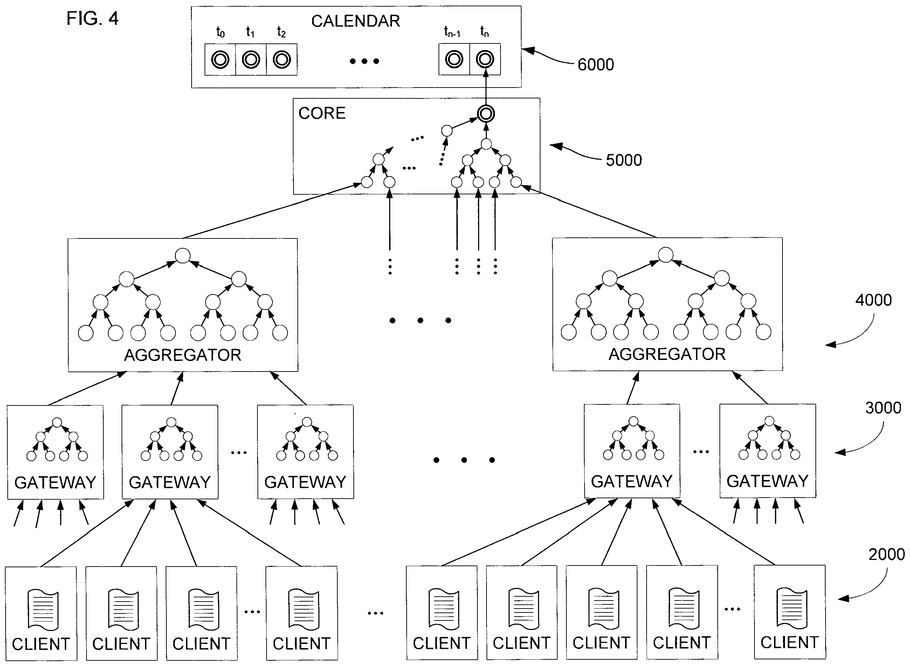

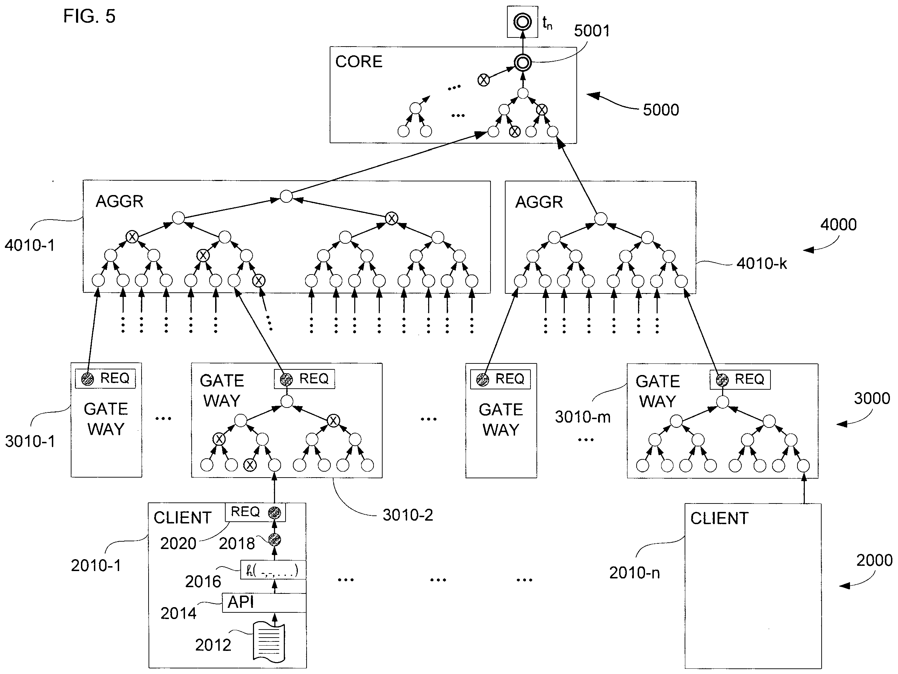

As Figures 4 and 5 show, the general Guardtime infrastructure has several different layers: a client layer 2000 comprising a number of client systems; a layer of gateways 3000; a layer including one or more aggregation systems 4000; and an uppermost layer 5000 that includes the "core", which is described in greater detail below. Although Figure 4 shows the various layers as being separate and distinct, some implementations of the main principles of the infrastructure might consolidate or do without some of the layers or might need to add additional layers for administrative or other purposes. The description below of what the various layers do will make it clear to those skilled in the art of systems architecture design how to implement such changes.

As Figure 4 also illustrates, the core layer 5000 will in general be common to all users of the system, whereas lower layers 2000, 3000, 4000 will in many implementations have a unique configuration depending on the needs and preferences of users. The distinction between "core/common" and "unique/distributed" is not hard and fast, however - in some implementations, the core, that is, centrally administered system, will encompass structures and functions that also are used in lower layers. One of the advantages of this infrastructure is that it allows for almost unlimited scalability and reconfiguration of the non-core layers to meet particular implementation needs. All that is required is that the various layers perform the specified functions, with common protocols for entering a digital record into the verification system and for generating registration requests.

In the illustrated arrangement, a client is the system where digital records are prepared and entered into the verification/signature system. Viewed in the context of the invention shown in Figure 1 and Figure 2 and described above, the "client" will be the hardware and software entity that creates the log 100 (or other input set of digital records, whether low-entropy or not) and incorporates, implements and evaluates the a masking hash tree 200, Note that it is not necessary for the same hardware and/or software entity to embody the log 100 and the tree 200; for example, it would be possible for a component in the same system as the log 100 to transmit log entries to a separate system that performs the aggregation and hash computations involved in generating blinding masks and evaluating the masking hash tree 200. In the special context of the primary example of this invention, the digital input record for the verification system will be the $x_{root}$ value output by the masking tree computation module 200.

A gateway in the gateway layer 3000 will typically be a computer system such as a server with which one or more of the clients communicates so as to receive requests for registration of each digital record that a client submits. In many implementations, a gateway will be a server controlled by an enterprise or some third-party provider, which may be a server known to and maybe even controlled by an organization to which the client user belongs, or a server accessed through a network such as the Internet. In short, a gateway may generally be any server located anywhere and configured to receive requests from clients for digital record registration. Gateway systems do not need to be of the same type; rather, one gateway might be a server within a company that employs many clients, whereas another gateway might be a server accessible online by arbitrary users. Of course, gateways could also be commercial systems, such that access for verification is granted only upon payment of a fee.

An aggregator in the aggregation layer 4000 will similarly be a computer system such as a server intended to receive registration requests that have been consolidated by respective gateways. Depending upon the scale and design requirements of a given implementation, any aggregator could also be controlled by the owner of the core, or the owner of the same systems as the gateways and clients, or could be provided by an entirely different entity, and in some cases it would also be possible to consolidate the aggregator and gateways for particular set of clients. For example, one design choice would be for the central system to include a set of aggregators as part of the "core" system, with lower-level, non-core aggregators submitting requests by communicating through the "core aggregators." One could then locate core aggregators geographically, such as one or more aggregators in each of Europe, North America and Asia, to reduce latency or for administrative reasons.

As another example, large corporations or government entities might prefer to implement and benefit from the advantages of the infrastructure using only their own dedicated systems. Nearer the other end of the spectrum of possibilities would be that the gateways and aggregators could all be configured using "cloud computing" such that a user at the client level has no idea where any particular gateway or aggregator is located or who controls the servers. One of the advantages of this infrastructure is that digital input records can still be verified with near total security even in situations where users and others do not know if they can trust the systems in the gateway or aggregation layers 3000, 4000; indeed, it is not even necessary to trust the administrator of the core 5000 in order to have essentially total reliability of verification.

Figure 5 shows the infrastructure of Figure 4 in more detail. In particular, Figure 5 illustrates various data structures used in the authentication process. In Figure 5, the various clients are represented as 2010-1, ..., 2010-n; gateways are represented as 3010-1, 3010-2, ... , 3010-m; and two (by way of example only) aggregators are shown as 4010-1, 4010-k. An aggregator will typically communicate into each of the lowest level hash tree nodes within the core. Only two aggregators are shown in Figure 5 for the sake of simplicity.

Consider the client system 2010-1, which will be whatever type of system that generates or inputs digital records that are to be registered for later verification. Just a few of the countless physical and software systems that may create digital inputs records, and that can be client systems in the sense of this invention, are a physical or virtual computer, a telecommunications device such as a mobile phone, hybrids of these two classes of devices, other computer-supervised machines for which state changes or other activities are logged (for example, flight data recorders or industrial processes), as well as pure software entities that have logged activities.

In one implementation, each client system that wishes to use the verification infrastructure is loaded with a software package or internal system routines for convenient or even automatic communication and submission "upwards" of digital information. The software package may include some application program interface (API) 2014 that transforms submitted digital records into a proper form for processing. A digital record 2012 created, selected, or otherwise input in any way is then submitted by way of the API 2014 to a software module 2016 that uses the digital data from the record 2012 as at least one argument in a transformation function such as a hash function.

In implementations of the invention designed for verifying event logs, the "client" will typically be a routine within the client system itself capable of extracting and submitting all or any desired portion of an event log as the input record to be signed and verified. In some cases, however, the event log may be separated or even remote from the system that receives or extracts the events or event log. For example, assume that the events relate to interactions between a mobile phone, tablet computer, etc., and a central telephone or wireless network system, or other types of system state changes of these devices. Examples of such events/state changes might be starting and shutting down the device, initiating and ending calls, transmitting or receiving sms messages or email, accessing the internet, moving from one cellular zone to another, receiving software updates, etc. Since these events are also detectable in the central exchange run by the service provider, events may be logged centrally and entered into the verification system either instead of or in addition to in and by the device itself.

Cryptographic hash functions are very well known in many areas of computer science and are therefore not described in greater detail here. Just one of many possible examples of a common class of hash functions that are suitable for use in this infrastructure are the "Message Digest" (MD) hash functions, which include the MD2, MD3, MD4, MD5,... functions and the various "secure hash algorithm" family (SHA-1, SHA-2, etc.).

Since the $x_{root}$ value itself is the result of evaluation of the masking hash tree 200, it will in many implementations not be necessary to further hash it within the client. Additional hashing within the client may be desired, however to include additional information depending on the design protocol of the infrastructure. Just a few of the many possible arguments the system designer might optionally choose to include as arguments of the additional hash function 2016 are an identifier of the person or entity requesting registration, an identifier of the particular client system being used, a time indication, information relating to the geographic location of the client or other system, or any other information desired to be incorporated as part of the registration request. Since the transformation function 2016 will generally (but not necessarily - again, more complicated schemes may be used as long as corresponding bookkeeping for the required data structures is implemented and maintained) output a single number or vector 2018 regardless of the number of input parameters; later authentication through recomputation will succeed as long as the function 2016 is known. A software module 2020 is preferably included to transmit the output of the transformation 2016 to higher layers of the infrastructure as a request (REQ), along with any other parameters and data necessary to communicate with a gateway and initiate the registration request.

It is assumed in this discussion that the transformation function 2016 is a hash function because this will be the most common and efficient design choice, and also because the properties of hash functions are so well understood; moreover, many different hash functions are used in the field of cryptology, security, etc., within commodity computers. One other advantageous property of hash functions is that they can reduce even large amounts of digital information to a size that is more easily processed, with a statistically insignificant chance of two different inputs leading to the same output. In other words, many well-known hash functions will be suitable for use throughout the infrastructure of this infrastructure, and can be chosen using normal design considerations. Nonetheless, the function that transforms digital records into a form suitable for submission as a request need not be a hash function as long as its properties are known. For example, especially for small digital records, it may be more efficient simply to transmit the digital record data as is, in its entirety or some subset; in this case, the transformation function may simply be viewed as an identity function, which may then also append whatever other additional information is needed according to the core system administration to form a proper registration request.

The data structure of a binary hash tree is illustrated within the gateway 3010-2. Each of the lowest level nodes will correspond to the transformed dataset 2018 (which may be either $x_{root}$ as is, or some augmented function of $x_{root}$) submitted as a request from a client, along with any other parameters or data used in any given implementation to form a request. As illustrated, the values represented by each pair of nodes in the data structure form inputs to a parent node, which then computes a combined output value, for example, as a hash of the two input values from its "children" nodes. Each thus combined output/hash value is then submitted as one of two inputs to a "grandparent" node, which in turn computes a combined output/hash value for these two inputs, and so on, until a single combined output/hash value is computed for the top node in the gateway.

Aggregators such as the system 4010-1 similarly include computation modules that compute combined output values for each node of a hash tree data structure. As in the gateways, the value computed for each node in the aggregator's data structure uses its two "children" nodes as inputs. Each aggregator will therefore ultimately compute an uppermost combined output value as the result of application of a hash function that includes information derived from the digital input record(s) of every client that submitted a request to a gateway in the data structure under that aggregator. Although it is of course possible, the aggregator layer 4000 does not necessarily need to be controlled by the same system administrator that is in charge of the core layer 5000. In other words, as long as they are implemented according to the required protocols and use the correct hash functions (or whatever other type of function is chosen in a given implementation), then the client, gateway, and aggregation layers may be configured to use any type of architecture that various users prefer.

**In** one embodiment, the core 5000 is maintained and controlled by the overall system administrator. Within the core, a hash tree data structure is computed using the root hash values of each aggregator as lowest level inputs. In effect, the hash computations and structure within the core form an aggregation of aggregation values. The core will therefore compute a single current uppermost core hash value at the respective tree node 5001 at each calendar time interval $t_0$, $t_1$, ..., $t_n$. This uppermost value is referred to here alternatively as the "calendar value" or "current calendar value" for the time interval. Note that the time origin and granularity are both design choices.

Note that the uppermost tree node 5001 represents the root node of the entire tree structure of nodes junior to it. As is explained later, this will change upon recomputation of a new uppermost core hash value at the end of the next period of accumulating requests and generating signature vectors ("also referred to as "data signatures") containing recomputation parameters. Other arrangements would, however, be possible. For example, to reduce or eliminate single-point-of-failure possibility, it would be possible for requests to be sent upward to and hashed into multiple aggregators as long as some mechanism is included to arbitrate between and/or consolidate the then multiple root hash values that include the lower level's root hash value.

In Figure 5, certain ones of the hash tree nodes in the gateway 3010-2, the aggregator 4010-1, and the core 5000 are marked with an "X". Notice if one traverses the various tree paths upward from the value 2018 in the client 2010-1, it is possible to compute every value upward in the tree structures all the way to the most current uppermost core value 5001 given the values in the X-marked tree nodes (the siblings of the nodes in the direct recomputation path) and a knowledge of the hash functions applied at each successive parent node. In short, if a signature is associated with the digital record 2012 that includes all of the "X marked" values, and assuming predetermined hash functions (which may of course be the same or different functions), then re-computation of the hash values upward through all of the tree structures will yield the same value as in the current calendar value, but only if the starting input value representing the original digital record (in particular, $x_{root}$ for a current event block) is in fact identical in every respect to the original. Even the slightest alteration to the digital input record of even a single bit in any of the values of the signature associated with a record 2012 will lead to a re-computed calendar value that is not identical to the one in node 5001. Note also that each uppermost computed value in the core - the current calendar value - contains information derived from every digital input record that is input into the system during the current calendar time interval.

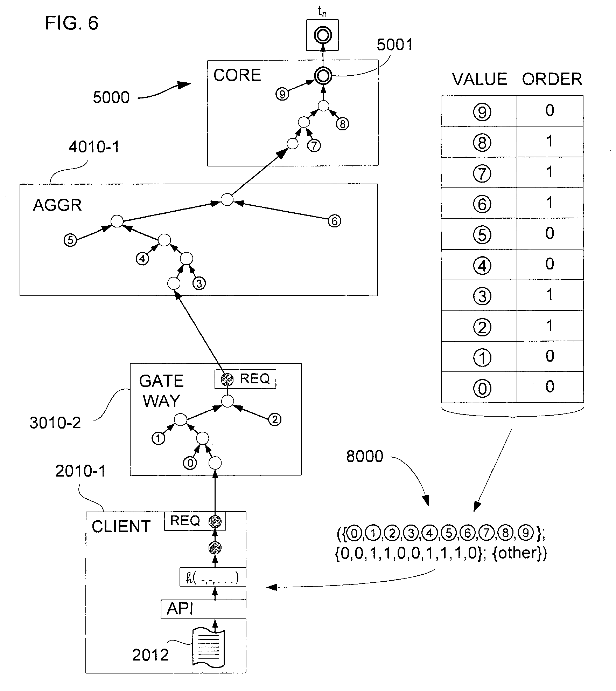

Figure 6 illustrates the "reduced" infrastructure whose hash tree node values contain the information necessary to recompute the hash tree path all the way to the top of the system to the value in node 5001. It is not necessary for the recomputation to be carried out in any gateway, aggregator or the core; indeed, it is not even necessary for recomputation to take place within the same client 2010-1 that originally submitted the verification request for the digital record 2012. All that is necessary is the vector containing the "sibling" tree values at each level, as well as knowledge of which hash functions are used to compute each parent node. In other words, given this information, even a third-party would be able to perform the recomputation and compare with the node value 5001 and thereby either authenticate any given representation of what is supposed to be digital record 2012, or to detect any difference.

In Figure 6, the sibling hash values needed for recomputation are numbered 0-9. If nodes are created in time order, and if order is important in the chosen hash function, then whether a sibling at each level is to the "right" or "left" in the hash structure will be relevant. In the example shown in Figure 6, not only the value but also the order (0: from left, 1: from right) is indicated in the vector ({sibling values 0-1 },{order bits},{other}) returned along with any other chosen information as the data signature 8000. At this point, one may see one advantage of using a binary hash tree structure: at each level, there will be only one sibling value needed for upward recomputation. Although a non-binary tree structure would be possible, one would then have to accept the increased computational, storage, and data-structural complexity. Comparing Figure 5 and Figure 6, one can also see that the computational burden to validate one of a set of N digital input records at any given time interval is proportional to only $\log_2 N$. To increase independence of the various layers - in particular, clients and later entities wishing to perform authentication through recomputation - it is advantageous for the entire calendar to be passed to the aggregators and even to the lower layers, even as far as to clients, every time a new calendar value is computed, that is, at the end of each calendar time interval. This then allows delegation and distribution of the computational workload without any compromise of the integrity of the system. Although it would be possible just to pass down the current calendar value if aggregators maintain a running database of calendar values, the entire calendar will typically not be large and can easily be transmitted entirely each time a new entry is computed. Figure 4 therefore shows a database or file (the "calendar") 6000 that includes all calendar values from the beginning of system time. This would allow new aggregators, gateways and clients to join the infrastructure with minimal administrative burden and would enable recomputation and authentication of any digital record without having to involve levels higher than the client-level entity wishing to authenticate the digital record.

The core may return the data signature vector 8000 to clients and/or other layers directly, or it can be constructed or passed "downward" as a return. For example, when the core computes the current calendar value 5001 at the new calendar time interval, it may return to aggregator 4010-1 its sibling (X-marked) lowest core node value from aggregator 4010-k, and the aggregator 4010-1 can then return downwards the X-marked hash values to the gateway 3010-2, which in turn can return downwards to the client 2010-1 all of the above, plus the X-marked hash values computed within that gateway's hash tree structure. In other words, not only may the hash computation infrastructure be distributed over various layers (vertically) and also "horizontally" at each layer, but the responsibility for communicating requests upward and partial or entire signature vectors downwards can also be distributed and can be carried out simultaneously in many different locations. Of course, since a data signature is unique to the digital record that led to it, the procedure for returning a signature vector for each input digital record 2012 for client 2010-1 (note that a single client may input more than one digital record for verification in each time interval) is preferably duplicated for all digital input records received in the time interval over which values were accumulated for the computation of node value 5001.

Note that the nature of the distributed infrastructure shown in Figure 5 and described here does not need to be static from one time interval to the next. Rather, each of the components below the core can be built asynchronously and independently of others; all that is needed for authenticating recomputation from a digital record up to the corresponding calendar value is the transformation function and other values that made up the original request, the vector of hash tree sibling values and knowledge of which hash functions are to be applied at each computation. Of course, the simplest case would be that the same hash function is used at every level. A somewhat more complicated choice would be to use the same hash function for all computations on a given level (within clients, within gateways, within aggregators, etc.) with variation between levels. Other even more complicated choices may of course be made as will be realized by those skilled in the art of such data structures and hash function computations. As long as the hash function used for each computation is known, the infrastructure will be able to validate a given input record.

In most cases, it is unlikely that the number of clients during a given computation interval will be exactly equal to a power of 2. Any known method may be used to adapt to the actual number of clients while still maintaining a binary hash tree structure throughout. As just one example of a solution to this, known dummy values may be used for all of the "missing" sibling node values. Alternatively, it is also possible to adjust the hash tree branches accordingly, in the manner of giving "byes" in single-elimination sports tournaments.

In one embodiment, the gateways 3000 may be more local to various clients whereas the aggregators are more regional. For example, it would be possible to locate aggregators in different parts of the world not only to distribute the workload, but also to increase throughput. Although it appears in Figures 4-6 that clients are associated with a particular gateway and gateways are associated with a particular aggregator, this is not necessary. Rather, client requests could be submitted over a network, and the first gateway that responds could then be associated with that client for that authentication transaction. Similarly, requests from gateways could be submitted to an open network and processed by whichever aggregator first establishes a connection. Locating aggregators and gateways both physically and logically in an efficient manner will therefore typically better distribute workload and reduce latency. This may not be desired in other implementations, however. For example, entities such as the government, defense contractors, or companies that wish to maintain strict security and tight control of the entire infrastructure could control and specify the relationship between all of the layers of the infrastructure, or any subset of these.

Assume now by way of example that some entity later wishes to verify that a digital record in question - a "candidate digital record" - is an identical copy of digital record 2012. Applying the same transformation function 2016 to the candidate digital record and recomputing upward using the corresponding data signature 8000, the entity should compute to the exact same calendar value that resulted from the original digital record's registration request. In some implementations, this level of verification is sufficient. As one possible example, if the calendar is distributed to enough independent aggregators, then if one malicious actor were to tamper with some calendar value, this could be detected if some procedure is implemented to compare with other copies of the same calendar.

As another example, in some implementations, users may choose or be obligated to rely on the security of the administrator of the core. In particular, government entities might implement a system in which users must simply rely on the government administrators. In these cases, recomputation up to the corresponding calendar value may be considered sufficiently reliable authentication. In the context of this infrastructure, this can be viewed as "first-level" verification. One hypothetical example of where such a system might be implemented would be where a government agency requires companies, laboratories, etc. to submit a copy of its calendar to the government entity every time the company's system updates its calendar. The government would then be able to audit the company's records and verify the authenticity of any given digital record by recomputing up to the proper calendar value, which the government will have stored. In practice, this would amount to requiring the company to keep updated a "calendar audit trail" with the auditing entity (such as the government).

Even in other instances, as long as the highest level system administrator trusts its ability to securely store calendars, it could be satisfied that a candidate digital record is authentic if recomputation leads to the appropriate stored calendar value. In a sense, it would be the system administrator itself in such cases that is looking for proof of the authenticity of candidate digital records as opposed to clients or other third-party entities. Consequently, the system administrator could trust the security of the recomputation and calendar values to the same extent it trusts itself to maintain the calendar copies.

All but the last digital record requesting registration in a calendar time period will typically need to wait for all other requests in the calendar time interval to be processed before a calendar value will be available that will enable authenticating recomputation. If the calendar time interval is kept short enough, this delay may be acceptable. To increase the level of security during the delay, it would also be possible to implement an option, whenever a client submits an authentication registration request, to generate and return not only the data signature vector but also a key-based signed certificate, which may be issued by any higher layer system such as the current gateway, aggregator, or even core.

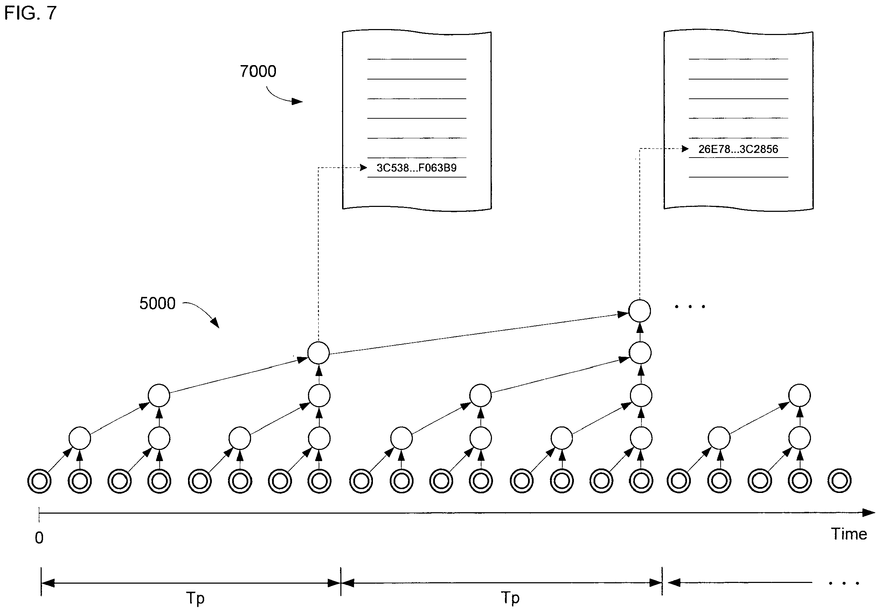

Figure 7 illustrates an extension of the basic calendar-reliant verification process that provides "second-level" verification that is a method for permanent verification with no need for keys or trust of any entity, not even the administrator of the core. In Figure 7, all of the calendar values computed over a publication time interval Tp are themselves used as inputs to an additional hash tree structure that is preferably hashed together (for example, using a Merkle tree structure) with previous calendar values to compute a composite calendar value (a "publication value") that may then be submitted for publication in some medium 7000 such as a newspaper, online posting, etc., that forms an unchangeable record of the composite calendar value. Here, the term "unchangeable" means that it would be practically impossible for even the most malicious actor - even if this is the core administrator - to alter every publicly available occurrence of the value. It is not necessary for "published" to be in any medium accessible to the general public, although this is of course one option that removes all need for a trusted authority; rather, a large or perhaps closed organization that implements the entire infrastructure on its own might simply choose to keep a database or journal of the composite calendar values in some secure logical or physical location.

Because of the various data structures and procedures of the distributed infrastructure, the published composite calendar value may encode information obtained from every input digital record over the entire publication time interval, and if the current calendar value for the current calendar period is hashed together with the previous one, which is hashed with the one before it, and so on, as shown in Figure 7, then each published composite calendar value will encode information from every digital record ever submitted for registration from the beginning of calendar time at $t_0$. This guarantees the integrity of the entire system: Changing even a single bit in a single digital record registered in the past will cause a different publication value to be computed, which would then not match the actual publication value. Once the composite signature value is published (that is, the publication value), there is never again any need to temporarily associate any signed digital certificate (which might be provided as before to increase security until the composite value is published, at which point it will not be needed) with the signature vector of the corresponding digital input record; rather, using the data signature vector and the calendar values (which are advantageously stored in each of the aggregators), one can then recompute hash values upward from any digital input record all the way to the published value. If the digital input record used in such recomputation leads to a match with the published value, then one can be certain to within the degree of certainty of the hash functions themselves that the digital input record being tested is identical to the one that originally received the corresponding signature vector.

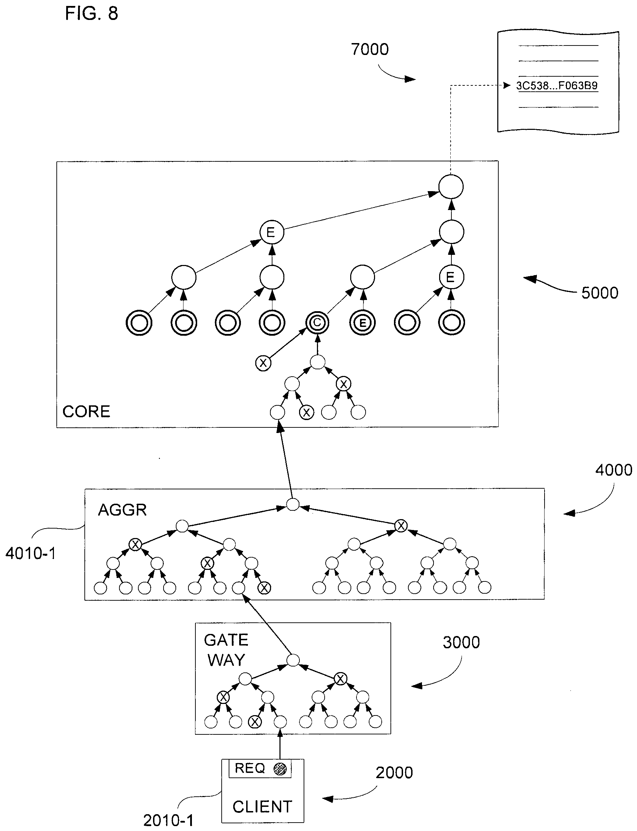

Figure 8 illustrates an optional extension of the signature vector to include the values obtained during computation of the publication value as well. Assume as before that the "X-marked" nodes are the sibling hash values for the digital record corresponding to the request REQ from client 2010-1. The X-marked values are sufficient to recompute the calendar value marked "C", but the hash values in the nodes marked "E" in the data structure (in Figure 8, the Merkle tree structure) within the core that converts calendar values into the publication value are necessary to recomputed all the way up to the published value 7000. At the end of the calendar period, the core therefore preferably extends or augments the signature vectors to include the "E" values, along with corresponding order bits as previously. With such an extended signature, any party can verify the authenticity of a given digital record as long as it has the extended signature vector, knowledge of the hash (or other) functions used, and the corresponding publication value - if recomputation leads to a match, then the digital record must be identical to the original; if not, then something has been altered. Note also that any change of order in the time of receipt for any to digital input records will also affect the computed values in the core as well as the published composite signature value.

This invention involves an extension to this scheme: additional hash nodes comprising blinding masks are generated as random or pseudo-random numbers and are included in hash computations, preferably in the core layer, but optionally in other layers instead or in addition. These additional node values (randomly generated numbers) can then be included in a returned data signature just as is they were any other node value, thereby enabling recomputation.

In Figure 7, eight calendar values are shown in each publication time interval Tp. In other words, in the illustration, the number of calendar time intervals in each publication time interval Tp is conveniently a power of 2. This may not be so in other implementations, depending on the choice of intervals. For example, if a calendar value is generated each second, but publication occurs only once every week (604,800 seconds), then there will *not* be a power of 2 number of calendar values as leaf nodes of the Merkle tree structure. As in other trees, this can be handled in a known manner as in giving "byes" in single-elimination sports tournaments by adjusting the tree branches, by using "dummy" inputs, etc.

Although it may in many cases be desirable or even required for the published value to encode information from the entire calendar from the beginning of calendar time, other alternatives can also be implemented as long as suitable bookkeeping routines are included. For example, rather than include *all* calendar values in the Merkle tree, at each publication time all of the most recent calendar values could be included in the publication computation along with a random sampling of calendar values from previous intervals. This would be one way, for example, to ensure that the number of included calendar values is conveniently a power of 2.

Similarly, in some contexts, government authorities require proof of records extending back only for some given time such as three years. In such cases it might be advantageous always to include only calendar values generated during this required period such that only relevant digital records are encoded in the most recent publication value.

Another alternative would be for there to be only a single computation of the publication value, including all calendar values from the beginning of system time. This might be useful, for example, in projects with clear time or digital record limits. For example, in litigation or transactions, parties often submit digital records to a "data room" for easy exchange. Calendar values could then be generated periodically as in other cases (perhaps with a longer calendar time interval since digital records will generally not be submitted as frequently as in large-scale, universally accessible implementations of the infrastructure's infrastructure), but with only a single computation of a publication value when all parties agree to close the data room. The publication value would then be a form of "seal" on the body of submitted digital records, which could later be used for recomputation and verification of any digital record ever submitted into the data room.

It is not absolutely necessary for the publication value to be computed using the Merkle hash tree data structure illustrated in Figure 7. One alternative might be, for example, that all calendar values over the publication time interval are concatenated and then hashed as a whole together with a pseudorandom number, which then becomes part of the extended data signature vectors. Other alternative are also possible.

Notice that a recomputation vector can also be associated with each event input e(i) so as to allow recomputation from its value, up through the blinding mask hash tree (in the illustrated case, a Merkle tree) to $x_{root}$. Example Procedure 3 is one example of how this can be done within the computation module 200. As an example of this, assume that the vector (a form of "local" data signature for the tree structure 200) $\{(left, m_2), (left, x_1), (right, x_{3,4})\}$ is associated with $rec_2$, which corresponds to e(k+2). Given e(k+2) and this information, the component 200, acting now as a verification engine, can compute $r_2$ by hashing $rec_2$ (e(k+2)). Hashing $m_1\|r_1$ will then yield $x_1$, hashing $x_1\|x_2$ will yield $x_{1,2}$ and then hashing $x_{1,2}\|x_{3,4}$ will yield $x_{root}$, but only if the value of e(k+2) used in this recomputation is in fact totally identical to the one that led to computation of $x_{root}$ originally. Observe that in this recomputation to verify e(k+2), it is not necessary to know the value of any other event e(j), and in fact any attempt to try to compute backwards to any other event value would require the practically impossible - backwards computation through one or more hash functions, whose input is high-entropy by virtue of the blinding mask.

In most anticipated implementations of this invention, there will typically be a large number of events e(j) in each block B. It would be possible to compile and associate a full digital signature vector that includes direction information and required sibling node values (plus hash function identifiers if these different hash functions are used within the overall infrastructure) all the way from the event value e(j) up to the calendar value 5001. This would, however, in most cases, require unacceptably great storage and computation burdens and would also be unnecessary. Rather, the preferred implementation is to digitally sign only the $x_{root}$. value for each block, and then maintain internal signature vectors for entries within a block for verifying recomputation up to $x_{root}$ - if each $x_{root}$. is globally verified, then it is sufficient to verify entries up to its level only.

It is not a requirement for systems in any given layer to apply the same hash functions. For example, the transformation functions used in different client systems could be different. As long as the functions at each place in the recomputation path are known to whoever later wants to authenticate a digital record through recomputation, the authentication process will work properly. Adding a hash function identifier as an input parameter to the preparation of the registration request would be one convenient way to enable future users to correctly authenticate a digital record through recomputation.

Throughout this description, reference is made to computing values by applying various functions such as hash functions. For example, in Figure 5, the client 2010-1 is shown as having a software module 2016 to do this. The hardware and software modules required to input values and compute outputs according to pre-programmed functions are of course well known in the art of computer science. Similar structures will be found in the other systems of the infrastructure, as well as the hardware and software needed for communication between the different illustrated systems, including where this communication is over a network.

**Claims**

**1.** A method for securely authenticating digital records, **CHARACTERISED BY**:

 inputting a series of record blocks, each block (B1) comprising a plurality of the digital records ($rec_1$, ..., $rec_4$),

each digital record indicating and corresponding to a computer system event represented and stored in a system log;

generating at least one substantially random number ($rnd_{B1}$);

for each record block:

computing an input record hash value ($r_1$, ..., $r_4$) for each of the digital records in the block;

computing a blinding mask value ($m_1$, ..., $m_4$) as a hash function having the substantially random number as an input parameter;

for each input record hash value, computing a masked hashed input value ($x_1$, ..., $x_4$) as a hash of the input record hash value and a respective one of the blinding masked values, said masked hashed input values constituting nodes of a hash tree;

computing subsequently aggregated hash tree values to form a single, root hash value ($x_{root}$);

keylessly digitally signing the root hash value; and

in a verification phase: verifying a record block using the keylessly digitally signed root hash value.

2. The method of claims 1, further **CHARACTERISED BY**, in said verification phase:

receiving a candidate digital input record corresponding to a designated one of the digital records; and

recomputing the root hash value ($x_{root}$) given the blinding hash value associated with the designated digital record and sibling node values of the designated digital record in a computation path in the hash tree from the designated digital record to the root hash value, whereby the candidate digital input record is deemed verified as being identical to the corresponding originally input digital record if the recomputed root hash value is equal to the root hash value obtained when originally computed.

3. The method of claim 1 or 2, **CHARACTERISED IN THAT** the hash tree is a Merkle tree.

4. The method of any one of claims 1 to 3, further **CHARACTERISED BY** computing the blinding mask value ($m_1$, ..., $m_4$) as the hash function having the substantially random number as one input parameter and, as another input parameter, the masked hashed input value corresponding to a previously submitted digital record, such that the computation of the masked hashed input values is chained; or

BY computing the blinding mask value ($m_1$, ..., $m_4$) as the hash function having the substantially random number as one input parameter and, as another input parameter, a counter indicating the ordinal position of the respective digital input record in the plurality of digital input records in the current block.

5. The method of any one of claims 1 to 4, **CHARACTERISED IN THAT** computing the subsequently aggregated hash tree values to form a single, root hash value comprises computing a successively diminishing number of node values, each node value being computed as a hash function of at least two lower node values and a level value indicating the level of each node in the hash tree; or

BY:

computing a different substantially random number for each block, and

using the same random number when computing the blinding mask value for the masked hashed input values in the same block.

6. The method of any one of claims 1 to 5, **CHARACTERISED IN THAT** the digital records are system events (e(k-1), ..., e(k+5)) such as computer system log entries, syslog entries or syslog variant entries, rsyslog entries, logged events of a telecommunications device, changes of state of a virtual machine, or changes of state of a mobile telecommunications device.

7. The method of any one of claims 1 to 6, in which the digital input records are events from more than one entity logged in a common log, further **CHARACTERISED BY**:

identifying and grouping the events per-entity into separate event threads; and for each thread, computing a separate thread root hash value; and

BY separately digitally signing each thread root hash value.

8. The method of any one of claims 1 to 7, **CHARACTERISED BY**

submitting the root hash value to a keyless, distributed hash tree authentication system (2000, 3000, 4000, 5000); and receiving, from the keyless, distributed hash tree authentication system, a digital signature associated with the root hash value.

9. The method as in claim 8, further **CHARACTERISED BY**
receiving, at a core system (5000) on a core processing level, from each of at least one highest non-core processing system (4010-1, ..., 4010-k) at a respective highest non-core processing level (4000), a current highest-level combined output value that is formed as digital combinations of successively lower-level combined output values computed in lower non-core processing levels as node values of the keyless, distributed hash tree authentication system having lowest level inputs formed as digital transformations, computed in user-level systems, of at least one digital input record, including the root hash values;
computing within the core system a current root calendar value as a digital combination of the current highest-level combined output values and a function of at least one previous root calendar value;
periodically computing and causing to be published in a substantially permanent form a published output value computed as a function of at least a subset of the highest-level combined output values;
whereupon an arbitrary subsequent test digital record is considered permanently authenticated relative to the corresponding digital input record if, applying the corresponding digital transformation to the test digital record and, using the recomputation parameters of the current calendar value and the composite calendar value to recompute the node values upward through the tree data structure and core, the same composite calendar value is attained as when it was originally computed;
computing the composite calendar value as a function of a plurality of current calendar values that have been computed over a publication period, including not only the current calendar value but also of at least one previous current calendar value;
in which:

the digital combinations are cryptographic hashes;
the recomputation parameters include, for each digital input record, the sibling node values in a directed path in the tree data structure from the digital transformations of the digital input record up to the composite calendar value; and
the recomputation parameters are keyless, such that, at latest upon publication of the composite calendar value, the recomputation parameters are independent of any trust authority parameters such as digital certificates or cryptographic keys.

10. The method of claim 7, further **CHARACTERISED BY** aggregating the thread root hash values into the single root hash value.

11. A system for securely authenticating digital records, **CHARACTERISED BY**:

a log (100) including digital representations of a series of events (e(k-1), ..., e(k+5)), each constituting a digital record, each digital record indicating and corresponding to a computer system event;
a masking hash tree computation component (200) including sub-components:

that input the digital records ($rec_i$) and group them into blocks (B1);
for each record block:

that compute an input record hash value ($r_i$) for each of the digital records in the block;
that compute a blinding mask value ($m_i$) as a hash function having a substantially random number ($rnd$) as an input parameter;
for each input record hash value, that compute a masked hashed input value ($x_i$) as a hash of the input record hash value and a respective one of the blinding masked values, said masked hashed input values constituting nodes of a hash tree computation structure; and
that compute subsequently aggregated hash tree values to form a single, root hash value ($x_{root}$);

the masking hash tree computation component further comprising a sub-module that submits the root hash value to a keyless digital signature system and associates a received digital signature with the root hash value
means for verifying a record block using the keylessly digitally signed root hash value.

12. The system of claim 11, **CHARACTERISED**

**IN THAT** the masking hash tree computation component, in a verification phase:

receives a candidate digital input record corresponding to a designated one of the digital records; and recomputes the root hash value given the blinding hash value associated with the designated digital record and sibling node values of the designated digital record in a computation path in the hash tree computation structure from the designated digital record to the root hash value, whereby the candidate digital input record is deemed verified as being identical to the corresponding originally input digital record if the recomputed root hash value is equal to the root hash value obtained when originally computed.

13. The system of claim 12, further **CHARACTERISED BY** a hash computation sub-module that computes the blinding mask value as a hash function having the substantially random number ($rnd$) as one input parameter and, as another input parameter, the masked hashed input value corresponding to a previously submitted digital record, such that the computation of the masked hashed input values is chained; and/or BY a hash computation sub-module that computes the blinding mask value as a hash function having the substantially random number as one input parameter and, as another input parameter, a counter indicating the ordinal position of the respective digital input record in the plurality of digital input records in the current block.

14. The system of claim 11 or 12, **CHARACTERISED IN THAT** the hash tree computation structure is a Merkle tree hashing structure computing aggregated hash tree values to form the single, root hash value ($x_{root}$) by computing a successively diminishing number of node values, each node value being computed as a hash function of at least two lower node values and a level value indicating the level of each node in the hash tree; or IN THAT the digital records are system events (e(k-1), ..., e(k+5)) such as computer system log entries, *syslog* entries or *syslog* variant entries, *rsyslog* entries, logged events of a telecommunications device, changes of state of a virtual machine, or changes of state of a mobile telecommunications device.

15. The system of claim 12, **CHARACTERISED BY** a keyless, distributed hash tree authentication system (2000, 3000, 4000, 5000), whereby the masking hash tree computation component submits the root hash value to the keyless, distributed hash tree authentication system and receives from the keyless, distributed hash tree authentication system a digital signature associated with the root hash value.

**Patentansprüche**

1. Verfahren zur sicheren Authentifizierung digitaler Einträge, **GEKENNZEICHNET DURCH**:

Eingeben einer Abfolge von Eintragsblöcken, wobei jeder Block (B1) eine Vielzahl der digitalen Einträge ($rec_1$, ..., $rec_4$) umfasst, wobei jeder digitale Eintrag ein Computersystemereignis angibt und einem Computersystemereignis entspricht, das in einem Systemprotokoll dargestellt und gespeichert ist;
Erzeugen wenigstens einer im Wesentlichen zufälligen Zahl ($rnd_{B1}$);
für jeden Eintragsblock:
Berechnen eines Eingangseintrags-Hashwertes ($r_1$, ..., $r_4$) für jeden der digitalen Einträge in dem Block;
Berechnen eines Blindmaskenwertes ($m_1$, ..., $m_4$) als Hash-Funktion mit der im Wesentlichen zufälligen Zahl als Eingangsparameter;
Berechnen eines maskierten gehashten Eingangswertes ($x_1$, ..., $x_4$) für jeden Eingangseintrags-Hashwert als Hash des Eingangseintrags-Hashwertes und eines jeweiligen der Blindmaskenwerte, wobei die maskierten gehashten Eingangswerte Knoten eines Hash-Baumse bilden;
Berechnen nachfolgend aggregierter Hash-Baumwerte, um einen einzelnen Wurzel-Hashwert ($X_{root}$) zu bilden;
schlüsselloses digitales Signieren des Wurzel-Hashwertes; und
in einer Verifizierungsphase:
Verifizieren eines Eintragsblocks mit dem schlüssellos digital signierten Wurzel-Hashwert.

2. Verfahren nach Anspruch 1, weiterhin **GEKENNZEICHNET DURCH** in der Verifizierungsphase:

Empfangen eines Kandidaten-Digitaleingangseintrags, der einem bestimmten der Digitaleinträge entspricht; und
Neuberechnen des Wurzel-Hashwertes ($X_{root}$) bei gegebenem Blind-Hashwert, der mit dem bezeichneten Digitaleintrag verknüpft ist, und gleichgeordneter Knotenwerte des bezeichneten Digitaleintrags in einem Berechnungspfad in dem Hash-Baum von dem bezeichneten Digitaleintrag bis zum Wurzel-Hashwert, wodurch der Kandidaten-Digitaleingangseintrag als identisch verifiziert zu dem entsprechenden ursprünglich Digitaleingangseintrag angesehen wird, wenn der neu berechnete Wurzel-Hashwert gleich dem Wurzel-Hashwert ist, den man bei der ursprünglichen Berechnung erhalten hatte.

3. Verfahren nach Anspruch 1 oder 2, **DADURCH GEKENNZEICHNET, dass** der Hash-Baum ein Merkle-Baum ist.

4. Verfahren nach einem der Ansprüche 1 bis 3, weiterhin **GEKENNZEICHNET DURCH** Berechnen des Blindmaskenwertes ($m_1$, ..., $m_4$) als Hash-Funktion, die als einen Eingangsparameter die im Wesentlichen zufällige Zahl und als weiteren Eingangsparameter, den maskierten gehashten Eingangswert hat, der einem zuvor übermittelten Digitaleintrag entspricht, so dass die Berechnung der maskierten gehashten Eingangswerte verkettet wird; oder **DURCH** Berechnen des Blindmaskenwertes ($m_1$, ..., $m_4$) als Hash-Funktion, die als einen Eingangsparameter die im Wesentlichen zufällige Zahl und als weiteren Eingangsparameter einen Zähler hat, der die Ordnungsposition des jeweiligen digitalen Eingangseintrags in der Vielzahl von digitalen Eingangseinträgen in dem aktuellen Block kennzeichnet.

5. Verfahren nach einem der Ansprüche 1 bis 4, **DADURCH GEKENNZEICHNET, dass** das Berechnen der anschließend aggregierten Hash-Baumwerte zur Bildung eines einzigen Wurzel-Hashwertes das Berechnen einer aufeinanderfolgend abnehmenden Anzahl von Knotenwerten umfasst, wobei jeder Knotenwert als Hash-Funktion von wenigstens zwei niedrigeren Knotenwerten und einem Ebenenwert berechnet wird, der die Ebene jedes Knotens im Hash-Baum anzeigt; oder
DURCH:

Berechnen einer anderem im Wesentlichen zufälligen Zahl für jeden Block, und
Verwenden derselben zufälligen Zahl bei der Berechnung des Blindmaskenwertes für die maskierten gehashten Eingangswerte in demselben Block.

6. Verfahren nach einem der Ansprüche 1 bis 5, **DADURCH GEKENNZEICHNET, dass** die digitalen Einträge Systemereignisse ($e(k-1)$, ..., $e(k + 5)$) sind, wie etwa Computersystemprotokolleinträge, Syslog-Einträge oder Syslog-Varianteneinträge, Rsyslog-Einträge, protokollierte Ereignisse einer Telekommunikationsvorrichtung, Zustandsänderungen einer virtuellen Maschine oder Zustandsänderungen einer mobilen Telekommunikationsvorrichtung.

7. Verfahren nach einem der Ansprüche 1 bis 6, bei dem die digitalen Eingangseinträge Ereignisse von mehr als einer in einem gemeinsamen Protokoll protokollierten Einheit sind, weiterhin **GEKENNZEICHNET DURCH**:

Identifizieren und Gruppieren der Ereignisse pro Einheit in separate Ereignis-Threads; und für jeden Thread Berechnen eines separaten Thread-Wurzel-Hashwertes; und
**DURCH** separates digitales Signieren jedes Thread-Wurzel-Hashwertes.

8. Verfahren nach einem der Ansprüche 1 bis 7, **GEKENNZEICHNET DURCH**
Übermitteln des Wurzel-Hashwerts an ein schlüsselloses, verteiltes Hash-Baum-Authentifizierungssystem (2000, 3000, 4000, 5000); und
Empfangen einer mit dem Wurzel-Hashwert verknüpften digitalen Signatur von dem schlüssellosen verteilten Hash-Baum-Authentifizierungssystem.

9. Verfahren nach Anspruch 8, weiterhin **GEKENNZEICHNET DURCH**
Empfangen, in einem Kernsystem (5000) auf einer Kernverarbeitungsebene, von jedem von wenigstens einem höchsten Nichtkern-Verarbeitungssystem (4010-1, ..., 4010-k) auf einer jeweiligen höchsten Nichtkern-Verarbeitungsebene (4000), eines aktuellen kombinierten Ausgangswertes höchster Ebene, der als digitale Kombinationen von aufeinanderfolgend kombinierten Ausgangswerten niedriger Ebene ausgebildet wird, die in niedrigeren Nichtkern-Verarbeitungsebenen als Knotenwerte des schlüssellosen, verteilten Hash-Authentifizierungssystems berechnet werden, das die Eingänge niedrigster Ebene hat, die als digitale Transformationen, berechnet in Systemen auf Benutzerebene, aus wenigstens einem digitalen Eingangseintrag einschließlich der Wurzel-Hashwerte ausgebildet werden;
Berechnen innerhalb des Kernsystems eines aktuellen Wurzelkalenderwertes als digitale Kombination der aktuellen kombinierten Ausgangswerte höchster Ebene und einer Funktion von wenigstens einem vorherigen Wurzelkalenderwert;
periodisches Berechnen und Bewirken der Veröffentlichung eines Ausgangswertes in einer im Wesentlichen permanenten Form, der in Abhängigkeit von wenigstens einer Teilmenge der kombinierten Ausgangswerte höchster Ebene berechnet wird;

woraufhin ein beliebiger nachfolgender digitaler Testeintrag in Bezug auf den entsprechenden digitalen Eingangseintrag als dauerhaft authentifiziert betrachtet wird, sofern unter Anwendung der entsprechenden digitalen Transformation auf den digitalen Testeintrag bei Verwendung der Neuberechnungsparameter des aktuellen Kalenderwertes und des zusammengesetzten Kalenderwertes zum erneuten Berechnen der Knotenwerte aufwärts durch die Baumdatenstruktur und den Kern derselbe zusammengesetzte Kalenderwert erreicht wird, als wenn er ursprünglich berechnet worden wäre;

Berechnen des zusammengesetzten Kalenderwertes in Abhängigkeit einer Vielzahl von aktuellen Kalenderwerten, die über einen Veröffentlichungszeitraum berechnet wurden, einschließlich nicht nur des aktuellen Kalenderwertes, sondern auch wenigstens eines vorherigen aktuellen Kalenderwertes;

wobei:

die digitalen Kombinationen kryptographische Hashes sind;

die Neuberechnungsparameter für jeden digitalen Eingangseintrag die gleichgeordneten Knotenwerte in einem gerichteten Pfad in der Baumdatenstruktur von den digitalen Transformationen des digitalen Eingangseintrags bis zu dem zusammengesetzten Kalenderwert umfassen; und

die Neuberechnungsparameter schlüssellos sind, so dass spätestens nach Veröffentlichung des zusammengesetzten Kalenderwertes die Neuberechnungsparameter unabhängig von etwaigen Vertrauensstellenparametern wie digitalen Zertifikaten oder kryptographischen Schlüsseln sind.

10. Verfahren nach Anspruch 7, weiterhin **GEKENNZEICHNET DURCH** Aggregieren der Thread-Wurzel-Hashwerte in den einzelnen Wurzel-Hashwert.

11. System zur sicheren Authentifizierung digitaler Einträge, **GEKENNZEICHNET DURCH**:

ein Protokoll (100), das digitale Darstellungen einer Abfolge von Ereignissen (e(k-1), ..., e(k + 5)) umfasst, die jeweils einen digitalen Eintrag bilden, wobei jeder digitale Eintrag ein Computersystemereignis anzeigt und diesem entspricht;

eine Maskierungs-Hash-Baum-Berechnungskomponente (200), die Unterkomponenten umfasst:

die die digitalen Einträge ($rec_i$) eingeben und sie zu Blöcken (B1) gruppieren; für jeden Eintragsblock:

einen Eingangseintrags-Hashwert ($r_i$) für jeden der digitalen Einträge in dem Block berechnen;

einen Blindmaskenwert ($m_i$) als Hash-Funktion mit einer im Wesentlichen zufälligen Zahl ($rnd$) als Eingangsparameter berechnen;

für jeden Eingangseintrags-Hashwert einen maskierten gehashten Eingangswert ($x_i$) als einen Hash des Eingangseintrags-Hashwertes und einen jeweiligen der Blindmaskenwerte berechnen, wobei die maskierten gehashten Eingangswerte Knoten einer Hash-Baum-Berechnungsstruktur bilden; und

die anschließend aggregierten Hash-Baumwerte berechnen, um einen einzelnen Wurzel-Hashwert ($x_{root}$) auszubilden;

wobei die Maskierungs-Hash-Baum-Berechnungskomponente weiterhin ein Untermodul umfasst, das den Wurzel-Hashwert an ein schlüsselloses digitales Signatursystem übermittelt und dem Wurzel-Hashwert eine empfangene digitale Signatur zuordnet,

eine Einrichtung zum Verifizieren eines Eintragsblocks unter Verwendung des schlüssellos digital signierten Wurzel-Hashwertes.

12. System nach Anspruch 11, **DADURCH GEKENNZEICHNET,**
**DASS** die Komponente des Maskierungs-Hash-Baums in einer Überprüfungsphase:

einen Kandidaten-Digitaleingangseintrag empfängt, der einem bestimmten der Digitaleinträge entspricht; und den Wurzel-Hashwert bei gegebenem Blind-Hashwert, der mit dem bezeichneten Digitaleintrag verknüpft ist, und gleichgeordneter Knotenwerte des bezeichneten Digitaleintrags in einem Berechnungspfad in der Hash-Baum-Berechnungsstruktur von dem bezeichneten Digitaleintrag bis zum Wurzel-Hashwert neu berechnet, wodurch der Kandidaten-Digitaleingangseintrag als identisch verifiziert zu dem entsprechenden ursprünglich Digitaleingangseintrag angesehen wird, wenn der neu berechnete Wurzel-Hashwert gleich dem Wurzel-Hashwert ist, den man bei der ursprünglichen Berechnung erhalten hatte.

13. System nach Anspruch 12, weiterhin **GEKENNZEICHNET DURCH** ein Hash-Berechnungs-Submodul, das den Blindmaskenwert als eine Hash-Funktion berechnet, die die im Wesentlichen zufällige Zahl (*rnd*) als den einen Eingangsparameter und als einen weiteren Eingangsparameter den maskierten gehashten Eingangswert hat, der einem zuvor übermittelten Digitaleintrag entspricht, so dass die Berechnung der maskierten gehashten Eingangswerte verkettet ist; und/oder

**DURCH** ein Hash-Berechnungs-Submodul, das den Blindmaskenwert als eine Hash-Funktion berechnet, die die im Wesentlichen zufällige Zahl als den einen Eingangsparameter und als einen weiteren Eingangsparameter einen Zähler umfasst, der die Ordnungsposition des jeweiligen Digitaleingangseintrags in der Vielzahl von Digitaleingangseinträgen in dem aktuellen Block anzeigt.

14. System nach Anspruch 11 oder 12, **DADURCH GEKENNZEICHNET, dass** die Hash-Baum-Berechnungsstruktur eine Merkle-Tree-Hash-Struktur ist, die aggregierte Hash-Baumwerte berechnet, um den einzelnen Wurzel-Hashwert ($x_{root}$) durch Berechnen einer nacheinander abnehmenden Anzahl von Knotenwerten auszubilden, wobei jeder Knotenwert als Hash-Funktion von wenigstens zwei niedrigeren Knotenwerten und einem Ebenenwert, der die Ebene jedes Knotens im Hash-Baum anzeigt, berechnet wird; oder DADURCH, DASS die digitalen Einträge Systemereignisse (e(k-1), ..., e(k + 5)) sind, wie etwa Computersystemprotokolleinträge, Syslog-Einträge oder Syslog-Varianteneinträge, Rsyslog-Einträge, protokollierte Ereignisse einer Telekommunikationsvorrichtung, Zustandsänderungen einer virtuellen Maschine oder Zustandsänderungen einer mobilen Telekommunikationsvorrichtung.

15. System nach Anspruch 12, **GEKENNZEICHNET DURCH** ein schlüsselloses, verteiltes Hash-Baum-Authentifizierungssystem (2000, 3000, 4000, 5000), wodurch die Maskierungs-Hash-Baum-Berechnungskomponente den Wurzel-Hashwert an das schlüssellose, verteilte Hash-Baum-Authentifizierungssystem übermittelt und von dem schlüssellosen, verteilten Hash-Baum-Authentifizierungssystem eine digitale Signatur empfängt, die dem Wurzel-Hashwert zugeordnet ist

## Revendications

1. Procédé pour authentifier de manière sécurisée des enregistrements numériques, **caractérisé par** :

la saisie d'une série de blocs d'enregistrements, chaque bloc (B1) comportant une pluralité d'enregistrements numériques ($rec_1$, ..., $rec_4$), chaque enregistrement numérique indiquant et correspondant à un événement de système informatique représenté et stocké dans un journal du système ;
la génération d'au moins un nombre substantiellement aléatoire ($rnd_{B1}$);
pour chaque bloc d'enregistrements :

le calcul d'une valeur de hachage d'enregistrement saisie ($r_1$, ..., $r_4$) pour chacun des enregistrements numériques dans le bloc ;
le calcul d'une valeur de masque aveuglant ($m_1$, ..., $m_4$) en tant que fonction de hachage ayant le nombre substantiellement aléatoire en tant que paramètre d'entrée ;
pour chaque valeur de hachage d'enregistrement saisie, le calcul d'une valeur d'entrée hachée masquée ($x_1$,...,$x_4$) en tant que hachage de la valeur de hachage d'enregistrement saisie et une valeur de masque aveuglant respective, lesdites valeurs d'entrée hachées masquées constituant des noeuds d'un arbre de hachage;
le calcul de valeurs d'arbre de hachage ultérieurement agrégées pour former une valeur de hachage racine ($x_{root}$) unique ;

signer numériquement la valeur de hachage racine sans clé ; et
dans une phase de vérification ;
vérifier un bloc d'enregistrement en utilisant la valeur de hachage racine signée numériquement sans clé.

2. Procédé selon la revendication 1, caractérisé en outre, dans ladite de de vérification, par :

la réception d'un enregistrement d'entrée numérique candidat correspondant à un enregistrement numérique désigné ; et
le recalcul de la valeur de hachage racine ($X_{root}$) selon la valeur de hachage aveuglante associée à l'enregistrement numérique désigné et les valeurs de noeuds frères de l'enregistrement numérique désigné dans un chemin de calcul de l'arbre de hachage allant de l'enregistrement numérique désigné à la valeur de hachage racine, de sorte que l'on considère que l'identité entre l'enregistrement d'entrée numérique candidat et l'enregistrement numérique initialement saisi correspondant est vérifiée, si la valeur de hachage racine est égale à la valeur de hachage racine obtenue lors du calcul initial.

3. Procédé selon la revendication 1 ou 2, **caractérisé en ce que** l'arbre de hachage est un arbre de Merkle.

4. Procédé selon l'une quelconque des revendications 1 à 3, en outre **caractérisé par** le calcul de la valeur de masquage aveuglant ($m_1$, ..., $m_4$) en tant que fonction de hachage ayant le nombre substantiellement aléatoire en tant qu'un des paramètres d'entrée et, en tant qu'autre paramètre d'entrée, la valeur d'entrée hachée masquée correspondant à un enregistrement numérique précédemment soumis, de sorte que le calcul des valeurs d'entrée hachées masquées est enchaîné ; ou
par le calcul de la valeur de masquage aveuglant ($m_1$, ..., $m_4$) en tant que fonction de hachage ayant le nombre substantiellement aléatoire en tant qu'un des paramètres d'entrée et, en tant qu'autre paramètre d'entrée, un compteur indiquant la position ordinale de l'enregistrement d'entrée numérique respectif parmi la pluralité d'enregistrements d'entrées numériques dans le bloc actuel.

5. Procédé selon l'une quelconque des revendications 1 à 4, **caractérisé en ce que** le calcul des valeurs d'arbre de hachage ultérieurement agrégées pour former une valeur de hachage de racine unique comporte le calcul d'un nombre de valeurs de noeud diminuant successivement, chaque valeur de noeud étant calculée en tant que fonction de hachage d'au moins deux valeurs de noeud inférieures et d'une valeur de niveau indiquant le niveau de chaque noeud dans l'arbre de hachage ; ou
par :

le calcul d'un nombre substantiellement aléatoire différent pour chaque bloc, et
l'utilisation du même nombre aléatoire lors du calcul de la valeur de masquage aveuglant pour les valeurs d'entrée hachées masquées dans le même bloc.

6. Procédé selon l'une quelconque des revendications 1 à 5, **caractérisé en ce que** les enregistrements numériques sont des événements système (e(k-1), ..., e(k+5)) tels que des entrées de journal du système informatique, des entrées syslog ou des entrées de variante de syslog, des entrées rsyslog, des événements enregistrés d'un dispositif de télécommunication, des changements d'état d'une machine virtuelle, ou des changements d'état d'un dispositif de télécommunication mobile.

7. Procédé selon l'une quelconque des revendications 1 à 6, où les enregistrements d'entrée numérique sont des événements de plus d'une entité, enregistrés dans un journal commun, en outre **caractérisé par** :

l'identification et le regroupement des événements par entité en des fils d'événements séparés ; et pour chaque fil, le calcul d'une valeur de hachage de racine de fils séparés ; et
par la signature numérique séparée de chacune des valeurs de hachage de la racine du fil.

8. Procédé selon l'une quelconque des revendications 1 à 7, **caractérisé par**
la présentation de la valeur de hachage de racine à un système d'authentification à arbre de hachage distribué sans clé (2000, 3000, 4000, 5000) ; et
la réception en provenance du système d'authentification à arbre de hachage distribué sans clé, d'une signature numérique associée à la valeur de hachage de racine.

9. Procédé selon la revendication 8, en outre **caractérisé par** :

la réception, au niveau d'un système central (5000) sur un niveau de traitement central, en provenance d'au moins un plus haut système de traitement non central (4010-1,..., 4010-k) au niveau d'un plus haut niveau de traitement non central (4000), d'une valeur de sortie combinée actuelle de plus haut niveau qui prend la forme de combinaisons numériques de valeurs de sortie combinées successives de niveaux inférieurs calculés dans des niveaux de traitement non centraux inférieurs en tant que valeurs de noeud du système d'authentification d'arbre de hachage distribué sans clé ayant des entrées de niveau le plus bas sous forme de transformations numériques, calculées dans des systèmes de niveau utilisateur d'au moins un enregistrement d'entrée numérique, comprenant les valeurs de hachage racine ;
le calcul à l'intérieur du système central d'une valeur calendaire de racine actuelle en tant que combinaison numérique des valeurs de sortie combinées actuelles de plus haut niveau et d'une fonction d'au moins une valeur calendaire de racine précédente ;

le calcul périodique et la publication sous une forme substantiellement permanente d'une valeur de sortie publiée calculée en tant que fonction d'au moins un sous-ensemble de valeurs de sortie combinées de plus haut niveau ; à la suite de quoi un enregistrement numérique de test ultérieur arbitraire est considéré comme étant authentifié de façon permanente par rapport à l'enregistrement d'entrée numérique correspondant si, en appliquant la transformation numérique correspondante à l'enregistrement numérique de test et en utilisant les paramètres de recalcul de la valeur calendaire actuelle et la valeur calendaire composite pour recalculer les valeurs de noeud vers le haut à travers la structure de données de l'arbre et le coeur, la même valeur calendaire composite que celle obtenue lors du calcul initial est obtenue ;

où :

les combinaisons numériques sont des hachages cryptographiques ;
les paramètres de recalcul comprennent, pour chaque enregistrement d'entrée numérique, les valeurs de noeuds frères dans un chemin orienté dans la structure de données de l'arbre allant des transformations numériques de l'enregistrement d'entrée numérique à la valeur calendaire composite ; et
les paramètres de recalcul sont sans clé, de sorte que, au plus tard au moment de la publication de la valeur calendaire composite, les paramètres de recalcul sont indépendants de tout paramètre d'autorité de confiance tels que des certificats numériques ou des clés cryptographiques.

**10.** Procédé selon la revendication 7, en outre **caractérisé par** l'agrégation des valeurs de hachage de racines de fils en une valeur de hachage de racine unique.

**11.** Système pour l'authentification sécurisée d'enregistrements numériques, **caractérisé par** :

un journal (100) comprenant des représentations numériques d'une série d'événements (e(k-1), ..., e(k+5)), constituant chacune un enregistrement numérique, chaque enregistrement numérique indiquant et correspondant à un événement de système informatique ;
un composant de calcul d'arbre de hachage de masquage (200) comprenant des sous-composants :

qui saisissent les enregistrement numériques ($rec_i$) et les regroupent en blocs (B1);
et, pour chaque bloc d'enregistrement :

calculent une valeur de hachage d'enregistrement saisi ($r_i$) pour chacun des enregistrements numériques dans le bloc ;
calculent une valeur de masque aveuglant ($m_i$) en tant que fonction de hachage ayant un nombre substantiellement aléatoire ($rnd$) en tant que paramètre d'entrée ;
pour chaque valeur de hachage d'enregistrement saisi, calculent une valeur d'entrée hachée masquée ($x_i$) en tant que hachage de la valeur de hachage d'enregistrement saisi et une valeur de masque aveuglant respective, lesdites valeurs d'entrée hachées masquées constituant des noeuds d'une structure de calcul en arbre de hachage ; et
calculent des valeurs d'arbre de hachage ultérieurement agrégées pour former une valeur de hachage racine ($x_{root}$) ;

le composant de calcul d'arbre de hachage de masquage comportant en outre un sous-module qui soumet la valeur de hachage racine à un système de signature numérique sans clé et associe une signature numérique reçue à la valeur de hachage racine des moyens pour vérifier un bloc d'enregistrement en utilisant la valeur de hachage racine signée numériquement sans clé.

**12.** Système selon la revendication 11, **caractérisé en ce que** dans une phase de vérification, le composant de calcul d'arbre de hachage de masquage :

reçoit un enregistrement d'entrée numérique candidat correspondant à un enregistrement numérique désigné ; et
recalcule la valeur de hachage racine selon la valeur de hachage aveuglante associée à l'enregistrement numérique désigné et les valeurs de noeuds frères de l'enregistrement numérique désigné dans un chemin de calcul de la structure de calcul en arbre de hachage allant de l'enregistrement numérique désigné à la valeur de hachage racine, de sorte que l'on considère que l'identité entre l'enregistrement d'entrée numérique candidat et l'enregistrement numérique initialement saisi correspondant est vérifiée, si la valeur de hachage racine recalculée est égale à la valeur de hachage racine obtenue lors du calcul initial.

**13.** Système selon la revendication 12, en outre **caractérisé par** un sous-module de calcul de hachage qui calcule la valeur de masquage aveuglant en tant que fonction de hachage ayant le nombre substantiellement aléatoire (*rnd*) en tant qu'un des paramètres d'entrée et, en tant qu'autre paramètre d'entrée, la valeur d'entrée hachée masquée correspondant à un enregistrement numérique précédemment soumis, de sorte que le calcul des valeurs d'entrée hachées masquées est enchaîné ; et/ou

par un sous-module de calcul de hachage qui calcule la valeur de masquage aveuglant en tant que fonction de hachage ayant le nombre substantiellement aléatoire en tant qu'un des paramètres d'entrée et, en tant qu'autre paramètre d'entrée, un compteur indiquant la position ordinale de l'enregistrement d'entrée numérique respectif parmi la pluralité d'enregistrements d'entrées numériques dans le bloc actuel.

**14.** Système selon la revendication 11 ou 12,
**caractérisé en ce que** la structure de calcul en arbre de hachage est une structure de hachage en arbre de Merkle qui calcule des valeurs d'arbre de hachage agrégées pour former la valeur de hachage de racine unique ($x_{root}$) en calculant un nombre de valeurs de noeud diminuant successivement, chaque valeur de noeud étant calculée en tant que fonction de hachage d'au moins deux valeurs de noeud inférieures et d'une valeur niveau indiquant le niveau de chaque noeud dans l'arbre de hachage ; ou

**en ce que** les enregistrements numériques sont des événements système (e(k-1), ..., e(k+5)) tels que des entrées de journal du système informatique, des entrées *syslog* ou des entrées de variante de *syslog*, des entrées *rsyslog*, des événements enregistrés d'un dispositif de télécommunication, des changements d'état d'une machine virtuelle, ou des changements d'état d'un dispositif de télécommunication mobile.

**15.** Système selon la revendication 12,
**caractérisé par** un système d'authentification à arbre de hachage distribué sans clé (2000, 3000, 4000, 5000), où le composant de calcul d'arbre de hachage de masquage soumet la valeur de hachage racine au système d'authentification à arbre de hachage distribué sans clé et reçoit, en provenance du système d'authentification à arbre de hachage distribué sans clé, une signature numérique associée à la valeur de hachage racine.

FIG. 1

FIG. 2

FIG. 3

FIG. 4

FIG. 5

FIG. 6

| VALUE | ORDER |
|:---:|:---:|
| ⑨ | 0 |
| ⑧ | 1 |
| ⑦ | 1 |
| ⑥ | 1 |
| ⑤ | 0 |
| ④ | 0 |
| ③ | 1 |
| ② | 1 |
| ① | 0 |
| ⓪ | 0 |

$t_n$

CORE

5001

5000

4010-1

AGGR

GATE WAY

3010-2

2010-1

CLIENT

REQ

$h(\cdot,\cdot,\ldots)$

API

2012

8000

({⓪,①,②,③,④,⑤,⑥,⑦,⑧,⑨};
{0,0,1,1,0,0,1,1,1,0}; {other})

FIG. 7

7000

3C538...F063B9

26E78...3C2856

5000

Time

0

Tp

Tp

. . .

EP 2 959 631 B1

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0111843 A1
- US 7698557 B
- US 8347372 B
- US 8312528 B

**Non-patent literature cited in the description**

- **RAINER GERHARDS.** The Syslog Protocol. *RFC 5424, IETF,* 2009